# EUROPÄISCHE PATENTSCHRIFT

(11) **EP 1 990 247 B1**
(45) Veröffentlichungstag und Bekanntmachung des Hinweises auf die Patenterteilung: **17.03.2010**
(21) Anmeldenummer: 08000365.0
(22) Anmeldetag: 10.01.2008
(51) Int. Cl.: B60R 21/231, B60R 21/26

(54) **Luftsackanordnung mit aussenliegender flexibler Gasleitung und Gasgenerator**
Air bag assembly with external flexible gas duct and generator
Coussin d'air avec un conduit de gaz flexible et un générateur externes

(30) Priorität: 10.05.2007 EP 07009416
(43) Veröffentlichungstag der Anmeldung: 12.11.2008
(73) Patentinhaber: Delphi Technologies, Inc., Troy, MI 48007 (US)
(72) Erfinder: Guthke, Detlev, 58089 Hagen (DE); Maiwald, Helmut, 51515 Kürten (DE)
(74) Vertreter: Denton, Michael John

(56) Entgegenhaltungen:
- DE-A1-102005 045 370
- DE-U1- 20 215 541
- DE-U1-202005 003 280

## Beschreibung

Die Erfindung betrifft eine Gasleitungsanordnung für in Kraftfahrzeugen eingesetzte Luftsackanordnungen, die wenigstens einen aufblasbaren Luftsack und zumindest einen im am Fahrzeug montierten Zustand entfernt von dem Luftsack angeordnetem Gasgenerator zum Aufblasen des Luftsacks umfassen.

Die Erfindung betrifft außerdem eine Luftsackanordnung für Kraftfahrzeuge mit wenigstens einem aufblasbaren Luftsack, zumindest einem im am Fahrzeug montierten Zustand entfernt von dem Luftsack angeordnetem Gasgenerator zum Aufblasen des Luftsacks, und wenigstens einer zumindest im Wesentlichen außerhalb des Luftsacks verlaufenden Gasleitung, die eine freie Wegstrecke zwischen dem Gasgenerator und dem Luftsack überbrückt und über die der Luftsack mittels des Gasgenerators aufblasbar ist, wobei die Gasleitung ein Bestandteil einer erfindungsgemäßen Gasleitungsanordnung ist.

Ferner betrifft die Erfindung die Verwendung einer Gasleitungsanordnung der hier angegebenen Art in einer Luftsackanordnung für Kraftfahrzeuge, die wenigstens einen aufblasbaren Luftsack und zumindest einen im am Fahrzeug montierten Zustand entfernt von dem Luftsack angeordneten Gasgenerator zum Aufblasen des Luftsacks umfasst.

Des Weiteren betrifft die Erfindung ein Verfahren zur Herstellung einer gasdichten Verbindung in einer Gasleitungsanordnung der hier angegebenen Art, bei dem die Verbindungsabschnitte der beiden Komponenten in ihre flache Montagekonfiguration gebracht, übereinander gelegt und miteinander verbunden werden, insbesondere durch Verkleben, Vernähen und/oder Verschweißen.

Gasleitungsanordnungen sind insbesondere dann von Interesse, wenn der Gasgenerator nicht in unmittelbarer Nähe zum Luftsack angeordnet werden kann oder soll. Durch eine zwischen dem Gasgenerator und dem Luftsack vorgesehene Gasleitung ergibt sich prinzipiell eine höhere Flexibilität bei der Konzeption und Montage der Luftsackanordnung im Fahrzeug.

Ein Beispiel hierfür ist die DE 20 2005 003 280 U1.

Problematisch hierbei ist, dass nur für die bzw. wegen der Gasleitung zusätzlicher Platz im Fahrzeug benötigt wird. Außerdem sind spezielle gasdichte Anbindungen erforderlich, was einen konstruktiven Mehraufwand mit sich bringen und sich nachteilig hinsichtlich der Herstellungskosten auswirken kann.

Aufgabe der Erfindung ist es, eine Gasleitungsanordnung der eingangs genannten Art derart weiterzubilden, dass sie bei möglichst geringem Aufwand und niedrigen Kosten bei der Herstellung vielseitig einsetzbar und Platz sparend im Fahrzeug montierbar ist.

Die Lösung dieser Aufgabe erfolgt durch die Merkmale des Anspruchs 1. Außerdem erfolgt die Lösung dieser Aufgabe durch eine Luftsackanordnung mit den Merkmalen des Anspruchs 20, die Verwendung einer Gasleitungsanordnung mit den Merkmalen des Anspruchs 21 sowie durch ein Herstellungsverfahren mit den Merkmalen des Anspruchs 22.

Erfindungsgemäß ist bei der Gasleitungsanordnung vorgesehen, dass die Gasleitungsanordnung eine erste Komponente und eine separate zweite Komponente umfasst, zwischen denen eine gasdichte Verbindung besteht, die von einem ersten Verbindungsabschnitt der ersten Komponente und einem zweiten Verbindungsabschnitt der zweiten Komponente gebildet ist, wobei zumindest eine der beiden Komponenten als eine zumindest im Wesentlichen außerhalb des Luftsacks verlaufende Gasleitung ausgebildet ist, die eine freie Wegstrecke zwischen dem Gasgenerator und dem Luftsack überbrückt und über die der Luftsack mittels des Gasgenerators aufblasbar ist, und wobei die Verbindungsabschnitte der beiden Komponenten jeweils derart, insbesondere flexibel, biegsam und/oder weich, ausgebildet sind, dass sie unter dem Einfluss von mittels des Gasgenerators freigegebenem Gas aus einer flachen Montagekonfiguration in eine Aufblaskonfiguration gelangen können.

Bei den beiden Komponenten handelt es sich insbesondere um im Ausgangszustand separate Komponenten, die zunächst unabhängig voneinander herstellbar sind und dann miteinander verbunden werden.

Eine derartige flexible, biegsame und/oder weiche Verbindung benötigt im Montagezustand aufgrund ihrer dann flachen und somit gewissermaßen zweidimensionalen Konfiguration extrem wenig Platz. Im Bedarfsfall ergibt sich der erforderliche Strömungsquerschnitt für das Gas durch die Wirkung des Gasgenerators gewissermaßen automatisch von selbst, indem der Gasgenerator die Verbindung aus der flachen Montagekonfiguration in die Aufblaskonfiguration überführt, insbesondere aufbläst, entfaltet, aufdrückt oder aufweitet, was erfindungsgemäß durch die flexible, biegsame und/oder weiche Ausgestaltung der Verbindungsabschnitte ermöglicht wird.

Die erfindungsgemäße Verbindung ist insofern universell einsetzbar, als sie zwischen unterschiedlichen Komponenten der Luftsackanordnung verwendet werden kann. Beispielsweise kann sowohl die Verbindung zwischen der Gasleitung und dem Luftsack selbst als auch die Verbindung zwischen der Gasleitung und einem weiteren Gasleitungsstück oder einem Anschlussstück in erfindungsgemäß flexibler Weise ausgebildet werden.

Bei dem Anschlussstück handelt es sich insbesondere um eine Komponente, die im Bereich der Anbindung des Gasgenerators an die Gasleitung zum Einsatz kommt und insbesondere dazu dient, in diesem Bereich die Gasdichtigkeit zwischen Gasgenerator und Gasleitung herzustellen. Mittels eines oder mehrerer weiterer Gasleitungsstücke, die in erfindungsgemäßer Weise mit der zu dem Luftsack führenden Gasleitung verbunden werden, lassen sich prinzipiell beliebig verzweigte Gasleitungssysteme mit einer grundsätzlich beliebigen Anzahl von mittels eines einzigen Gasgenerators aufzublasenden Luftsäcken realisieren, bei denen die gasdichten Verbindungen der einzelnen Komponenten untereinander aufgrund der erfindungsgemäßen flexiblen, biegsamen und/oder weichen Ausgestaltung besonders Platz sparend im Fahrzeug untergebracht werden können.

Ein besonderer Vorteil der erfindungsgemäßen Gasleitungsanordnung, der aus der Ausgestaltung der insbesondere flexiblen, biegsamen und/oder weichen Verbindungsabschnitte resultiert, besteht darin, dass diese die Herstellung der gasdichten Verbindung in einer zweidimensionalen Situation ermöglichen. Zur Herstellung der gasdichten Verbindung ist es möglich, die beiden Verbindungsabschnitte zunächst in ihre flache Montagekonfiguration zu bringen, in einer vorgegebenen Weise relativ zueinander ausgerichtet übereinander zu legen und anschließend fest miteinander zu verbinden, wobei diese Verbindung insbesondere durch Verkleben, Vernähen und/oder Verschweißen erfolgt.

Insbesondere ist es möglich, die beiden Verbindungsabschnitte jeweils in ihrer flachen Montagekonfiguration auf eine ebene Arbeitsunterlage zu legen, gegebenenfalls ein geeignetes Klebemittel aufzubringen und anschließend beispielsweise mittels eines Stempels, der eine ebene Arbeitsseite aufweist, mit Druck zu beaufschlagen. Hierbei ist es also nicht erforderlich, die Herstellung der gasdichten Verbindung in der dreidimensionalen Aufblaskonfiguration vorzunehmen, was Aufwand und Kosten für die Herstellung beträchtlich erhöhen würde.

Besonders vorteilhaft kann die erfindungsgemäße Verbindung im Zusammenhang mit einer Gasverteilung eingesetzt werden, die insbesondere in Anwendungen zum Einsatz kommen kann, bei denen mit einem Gasgenerator gleichzeitig zwei Luftsäcke aufgeblasen werden sollen oder - allgemein ausgedrückt - die Anzahl von zur Verfügung stehenden Gasquellen kleiner ist als die Anzahl von im Fahrzeug räumlich getrennt voneinander anzuordnenden Luftsäcken. Bei der erfindungsgemäßen Gasleitungsanordnung handelt es sich dann um einen flexiblen, biegsamen und/oder weichen Gasverteiler. Hierdurch wird insbesondere eine kontrollierte Gasführung in zwei oder mehr Richtungen ermöglicht.

Es hat sich überraschend herausgestellt, dass ein erfindungsgemäßer, insbesondere von der erfindungsgemäßen Verbindung Gebrauch machender Gasverteiler an einen einzigen Gasauslass eines Gasgenerators angeschlossen und dazu verwendet werden kann, das von dem Gasgenerator freigegebene Gas gleichzeitig zwei räumlich voneinander getrennt angeordneten Luftsäcken zuzuführen, um die Luftsäcke gleichzeitig aufzublasen. Dabei wurde gefunden, dass auch bei nicht symmetrischem Aufbau des Gasleitungssystems und selbst bei einer stark asymmetrischen Anordnung des Gasgenerators wesentlich näher an einem Luftsack als an einem anderen Luftsack das von dem Gasgenerator freigegebene Gas im Wesentlichen gleichmäßig auf die beiden Luftsäcke verteilt werden kann. Insbesondere treten keine störenden Effekte dergestalt auf, dass das von dem Gasgenerator freigegebene Gas überwiegend zu lediglich einem der beiden Luftsäcke strömt, was zu einem in der Praxis nicht akzeptierbaren ungleichmäßigen Aufblasen der beiden Luftsäcke führen würde.

Vor diesem Hintergrund wird gemäß einem weiteren Aspekt der Erfindung unabhängig Schutz beansprucht für eine Luftsackanordnung mit wenigstens zwei in am Fahrzeug montierten Zustand entfernt voneinander angeordneten Luftsäcken und mindestens einem Gasgenerator zum gleichzeitigen Aufblasen der Luftsäcke, wobei die Luftsäcke an einen gemeinsamen Gasauslass des Gasgenerators angeschlossen sind.

Dabei kann vorgesehen sein, dass der Gasgenerator einen, insbesondere als Diffusor ausgebildeten, Verteilerabschnitt umfasst, über den das Gas gleichzeitig in wenigstens zwei unterschiedliche, insbesondere einander entgegengesetzte, Richtungen strömen kann, wobei der Verteilerabschnitt des Gasgenerators in einem Gasleitungssystem angeordnet ist, an das die beiden Luftsäcke angeschlossen sind, wobei das Gasleitungssystem derart, insbesondere flexibel, biegsam und/oder weich, ausgebildet ist, dass es unter dem Einfluss von mittels des Gasgenerators freigegebenem Gas aus einer flachen Montagekonfiguration in eine Aufblaskonfiguration gelangen kann. Insbesondere kann das Gasleitungssystem eine erfindungsgemäße Gasleitungsanordnung umfassen.

Ferner kann dabei vorgesehen sein, dass der Verteilerabschnitt des Gasgenerators zumindest mit seinem freien Endbereich, aus dem das Gas austritt, in einer, insbesondere durchgehenden und/oder einstückigen, Gasleitung angeordnet ist, welche die beiden Luftsäcke miteinander verbindet.

Ebenfalls unabhängig beansprucht wird gemäß einem weiteren Aspekt der Erfindung ein Gasleitungssystem für eine Kraftfahrzeug-Luftsackanordnung, die wenigstens einen Gasverteiler umfasst, der zumindest zwei Ausgänge, an die zwei im am Fahrzeug montierten Zustand entfernt voneinander angeordnete Luftsäcke anschließbar sind, und wenigstens einen Eingang aufweist, der an einen Gasgenerator zum gleichzeitigen Aufblasen der Luftsäcke anschließbar ist, wobei der Gasverteiler derart, insbesondere flexibel, biegsam und/oder weich, ausgebildet ist, dass er unter dem Einfluss von mittels des Gasgenerators freigegebenem Gas aus einer flachen Montagekonfiguration in eine Aufblaskonfiguration gelangen kann. Dabei kann insbesondere der Gasverteiler eine erfindungsgemäße gasdichte Verbindung umfassen.

Dabei kann vorgesehen sein, dass der Gasverteiler einen, insbesondere als Diffusor ausgebildeten, Verteilerabschnitt umfasst, der an einen Gasauslass des Gasgenerators anschließbar oder mit einem Gasauslass des Gasgenerators verbunden ist und über den von dem Gasgenerator freigegebenes Gas gleichzeitig in wenigstens zwei unterschiedliche, insbesondere einander entgegengesetzte, Richtungen strömen kann.

Ferner kann vorgesehen sein, dass der Gasverteiler eine durchgehende Gasleitung umfasst, mit der die beiden Luftsäcke miteinander verbindbar sind, wobei der Verteilerabschnitt des Gasgenerators in der Gasleitung angeordnet ist.

Vorteilhafte Weiterbildungen der Erfindung sind in den abhängigen Ansprüchen, der Beschreibung sowie der Zeichnung angegeben. Diese Ausgestaltungen werden nicht nur in Verbindung mit der im unabhängigen Anspruch 1 angegebenen Gasleitungsanordnung offenbart und beansprucht, sondern - sofern technisch ausführbar - außerdem in Verbindung mit den anderen unabhängig beanspruchten Aspekten der Erfindung, wie sie insbesondere vorstehend erwähnt und in den weiteren unabhängigen Ansprüchen angegeben sind.

Vorzugsweise wird zumindest ein Verbindungsabschnitt von einem flexiblen, biegsamen und/oder weichen röhren- oder schlauchartigen Gebilde und insbesondere von einem Schlauch gebildet. Insbesondere ist vorgesehen, dass die Gasleitung, das Anschlussstück und - sofern vorhanden - weitere Gasleitungsstücke jeweils im Wesentlichen als Ganzes von einem Schlauch gebildet werden.

Die Verbindungsabschnitte bzw. die Gasleitschläuche können aus einem Gewebe- oder Textilmaterial hergestellt sein. Insbesondere wird dasjenige Material oder ein gleichartiges Material verwendet, aus dem auch die Hülle des Luftsacks hergestellt ist oder hergestellt werden kann. Es ist auch möglich, ein, insbesondere flexibles, biegsames und/oder weiches Kunststoffmaterial zu verwenden.

Es hat sich des Weiteren herausgestellt, dass es genügt, wenn die erfindungsgemäße gasdichte Verbindung ausschließlich von den flexiblen, biegsamen und/oder weichen Verbindungsabschnitten gebildet ist. Insbesondere ist es nicht erforderlich, zusätzliche starre oder steife Elemente z.B. zur Stabilisierung der Verbindung oder zur Umlenkung des aus dem Gasgenerator strömenden Gases einzusetzen. Vorzugsweise besteht die gesamte Gasleitungsanordnung aus im Sinne der Erfindung flexiblen, biegsamen und/oder weichen, insbesondere schlauchartigen, Gasleitungen.

Eine besonders einfache und kostengünstig herstellbare Verteilung des von einem einzigen Gasgenerator bereitgestellten Gases auf wenigstens zwei im montierten Zustand räumlich voneinander entfernt angeordnete Luftsäcke kann gemäß einer weiteren Ausgestaltung der Erfindung dadurch realisiert werden, dass die beiden Luftsäcke mittels einer durchgehenden Gasleitung miteinander verbunden werden und der Anschluss des Gasgenerators an einem Zwischenabschnitt der Gasleitung erfolgt. Dieser Zwischenabschnitt ist dann Bestandteil einer erfindungsgemäßen gasdichten Verbindung bzw. eines erfindungsgemäßen Gasverteilers.

Bei dem Gasgenerator handelt es sich vorzugsweise um einen schubneutral ausgeführten Gasgenerator. Erfindungsgemäß kann die Schubneutralität des Gasgenerators in geschickter Weise für eine Gasverteilung auf zwei räumlich voneinander getrennte Luftsäcke genutzt werden, indem ein insbesondere als Diffusor ausgebildeter Verteilerabschnitt des Gasgenerators, über den das Gas gleichzeitig in wenigstens zwei unterschiedliche, insbesondere einander entgegengesetzte, Richtungen strömen kann, in die erfindungsgemäße Gasleitungsanordnung, insbesondere in den erfindungsgemäßen Gasverteiler und insbesondere in eine durchgehende, die beiden Luftsäcke miteinander verbindende Gasleitung, integriert wird.

Insbesondere kann der Verteilerabschnitt in einer die beiden räumlich voneinander getrennten Luftsäcke miteinander verbindenden, insbesondere durchgehenden, Gasleitung derart angeordnet werden, dass die einander entgegengesetzten Gasströmungsrichtungen des Verteilerabschnitts zumindest im Bereich der Anbindung des Gasgenerators an die Gasleitung mit der Längsachse der Gasleitung zumindest im Wesentlichen ausgerichtet sind. Der Verteilerabschnitt des Gasgenerators und die durchgehende Gasleitung bilden dann gemeinsam einen Gasverteiler zum gleichzeitigen Aufblasen der beiden Luftsäcke.

Die Verwendung einer durchgehenden Gasleitung in diesem Zusammenhang hat den Vorteil, dass beim Aufblasen der Luftsäcke die Kräfte, die durch das strömende Gas auf die Gasleitung einwirken, einander entgegengerichtet sind und sich somit gegenseitig aufheben. Auf diese Weise lässt sich erfindungsgemäß auf denkbar einfache Weise in einer erfindungsgemäßen Gasleitungsanordnung eine gewissermaßen schubneutrale Anbindung eines Gasgenerators an ein Gasleitungssystem oder an eine Verteilungsleitung bzw. ein gewissermaßen schubneutraler Gasverteiler realisieren.

Eine besonders Platz sparende Anordnung wird gemäß einer weiteren Ausführungsform der Erfindung erhalten, wenn ein Verteilerabschnitt des Gasgenerators verformbar ausgebildet ist, und zwar derart, dass der Verteilerabschnitt unter dem Einfluss von mittels des Gasgenerators freigegebenem Gas aus einer flachen Montagekonfiguration in eine Aufblaskonfiguration mit gegenüber der Montagekonfiguration vergrößertem Strömungsquerschnitt gelangen kann. Insbesondere kann die Dynamik des aus dem Gasgenerator austretenden Gases genutzt werden, um ein bei der Herstellung zu Montagezwecken flach- bzw. zusammengedrücktes Rohrstück, das einen Bestandteil des Verteilerabschnitts bildet, wieder auseinander zu drücken bzw. zu "entfalten".

Wie der flexible Gasverteiler bzw. das gesamte Gasleitungssystem gemäß der Erfindung selbst nimmt bei dieser Ausgestaltung somit auch der Verteilerabschnitt des Gasgenerators nur dann relevanten Raum im Fahrzeug ein, wenn er auch tatsächlich benötigt wird.

Des Weiteren können die Verbindungsabschnitte der beiden Komponenten einander zumindest bereichsweise überlappen. Dies ermöglicht die Herstellung einer einfachen und gleichzeitig mit relativ hohen Kräften beanspruchbaren Verbindung zwischen den beiden Verbindungsabschnitten.

Insbesondere können die Verbindungsabschnitte der beiden Komponenten miteinander verklebt, vernäht und/oder verschweißt werden.

Des Weiteren kann vorgesehen sein, dass die Verbindungsabschnitte der beiden Komponenten in der Montagekonfiguration in parallel zueinander verlaufenden Ebenen liegen. Dies führt zu einer weiteren Vereinfachung der Herstellung der erfindungsgemäßen gasdichten Verbindung.

Ferner kann vorgesehen sein, dass der Verbindungsabschnitt zumindest einer der beiden Komponenten als eine den Übergang zwischen den beiden Komponenten abdichtende Abdeckung ausgebildet ist. Sich ansonsten hinsichtlich der Gasdichtigkeit als potentielle Schwachstellen erweisende Bereiche der Verbindung können hierdurch in zuverlässiger Weise gasdicht ausgeführt werden.

In einem weiteren Ausführungsbeispiel ist vorgesehen, dass die Wandung des Verbindungsabschnitts der einen Komponente eine Öffnung für ein offenes Ende der anderen Komponente aufweist. Indem die eine Komponente mit ihrem offenen Ende an die Öffnung der anderen Komponente angesetzt werden kann, ist es erfindungsgemäß auf einfache Weise möglich, Verzweigungen oder Verteiler zu realisieren, wobei im Bereich der gasdichten Verbindung die betreffenden Komponenten nicht parallel und insbesondere unter einem rechten Winkel zueinander verlaufen.

Hierbei ist insbesondere der Verbindungsabschnitt der einen Komponente von Wandungsbereichen gebildet, welche die in dieser Komponente ausgebildete Öffnung begrenzen.

Ferner ist hierbei insbesondere der Verbindungsabschnitt der anderen Komponente von mehreren Laschen gebildet, die am offenen Ende der Komponente angeordnet sind und zumindest in der Montagekonfiguration in unterschiedliche Richtungen abstehen. Vorzugsweise sind diese Laschen einstückig mit der Komponente ausgebildet. Die Einstückigkeit bedeutet automatisch eine absolute Gasdichtigkeit im Bereich des Übergangs zwischen Laschen einerseits und dem Rest der Komponente andererseits.

In einem speziellen Ausführungsbeispiel ist vorgesehen, dass die Laschen durch Herstellen von vom freien Ende ausgehenden Einschnitten in der Wandung eines rohr- oder schlauchförmigen Ausgangsstücks entstanden sind. Hierdurch kann erreicht werden, dass für den Verbindungsabschnitt der Komponente der gesamte Umfang der eingeschnittenen Wandung in Form der hierdurch entstehenden Laschen für eine gasdichte Anbindung an den Verbindungsabschnitt der anderen Komponente genutzt werden kann. Hierbei ist insbesondere wenigstens eine Gruppe von Laschen vorgesehen, die in Umfangsrichtung, insbesondere gleichmäßig, verteilt angeordnet sind, wobei insbesondere die Gruppe genau vier Laschen umfasst.

In einer besonderen Ausführungsform ist vorgesehen, dass mehrere Gruppen, insbesondere genau zwei Gruppen, von Laschen vorgesehen sind, die in der Montagekonfiguration in parallel zueinander verlaufenden Ebenen liegen und derart gegeneinander verdreht oder versetzt sind, dass - in Umfangsrichtung betrachtet - jeweils eine Lasche der einen Gruppe zwischen zwei Laschen der anderen Gruppe gelegen ist. Sich hinsichtlich der Gasdichtigkeit als potentielle Schwachstellen zeigende Bereiche, nämlich die vom freien Ende entfernt gelegenen Enden der Einschnitte, gewissermaßen also die "Fußpunkte" der Laschen, werden auf diese Weise zuverlässig durch die Laschen der jeweils anderen Gruppe abgedichtet. Es wird hier folglich eine gegenseitige Abdichtung durch Überlappung mit den Laschen der jeweils anderen Gruppe realisiert, die - wie Versuche gezeigt haben - eine zuverlässige Gasdichtigkeit garantiert.

Dabei kann vorgesehen sein, dass die mit den Laschen versehene Komponente mehrwandig ausgebildet ist, wobei eine Gruppe von Laschen von einer inneren Wandung und eine weitere Gruppe von Laschen von einer äußeren Wandung ausgeht.

Die Mehrwandigkeit der Komponente kann beispielsweise dadurch realisiert werden, dass diese Komponente zwei ineinander liegende Einzelkomponenten umfasst, von denen die eine die innere Wandung und die andere die äußere Wandung bildet.

Gemäß einer alternativen Ausgestaltung kann vorgesehen sein, dass die mit den Laschen versehene Komponente durch Zusammenrollen oder Aufrollen eines flächigen Ausgangsstücks um mehr als 360°, insbesondere um wenigstens 720°, entstanden ist.

Die vorstehend erwähnte Anordnung mit gegeneinander verdrehten, sich gegenseitig abdichtenden Laschengruppen führt zu einer hervorragenden Gasdichtigkeit der Verbindung. Die Laschen werden insbesondere mit den die Öffnung der anderen Komponente begrenzenden Wandungsbereichen verbunden, insbesondere verklebt, vernäht und/oder verschweißt. Diese Art und Weise der Verbindung hat sich nicht nur als ausreichend gasdicht, sondern außerdem als in hohem Maße beanspruchungsfest erwiesen. Zusätzliche Abdicht- und/oder Verbindungsmittel sind möglich, prinzipiell aber nicht erforderlich.

Gleichwohl ist es erfindungsgemäß möglich, wenigstens eine zusätzliche Abdeckung vorzusehen, die unter zumindest teilweiser Zwischenlage der Laschen mit die Öffnung der anderen Komponente begrenzenden Wandungsbereichen verbunden ist, wobei diese Verbindung wiederum insbesondere durch Verkleben, Vernähen und/oder Verschweißen erfolgen kann. Eine derartige zusätzliche Abdeckung kann auch als "Flansch" bezeichnet werden. Mit einem derartigen zusätzlichen Flansch kann eine weitere Verbesserung sowohl hinsichtlich Gasdichtigkeit als auch mechanischer Festigkeit der Verbindung erzielt werden.

Die Verbindung zwischen den einzelnen Komponenten, insbesondere zwischen der Gasleitung einerseits und dem Luftsack, dem Anschlussstück oder - sofern vorhanden - weiteren Gasleitungsstücken andererseits, kann insbesondere nach Art einer Steck-/Schlitz-Verbindung ausgeführt sein. Insbesondere ist vorgesehen, dass die eine Komponente in ihrer Hülle oder Wandung mit einem Schlitz oder Einschnitt versehen ist, der mit einem Endabschnitt der anderen Komponente zusammenwirkt, wobei unter Endabschnitt ein mit einem offenen stirnseitigen Ende versehener Endbereich eines in der Aufblaskonfiguration eine schlauch- oder röhrenförmige Gestalt aufweisenden Verbindungsabschnitts verstanden wird.

Der Endabschnitt kann beispielsweise in den Schlitz der anderen Komponente eingesteckt werden. Hierbei ist vorzugsweise vorgesehen, dass der Endabschnitt mit wenigstens einer und insbesondere mit zwei einander gegenüberliegenden seitlichen Öffnungen insbesondere in Form von Schlitzen oder Einschnitten versehen ist, die vorzugsweise von dem offenen Ende des Endabschnitts ausgehen. Hierdurch wird der Endabschnitt mit in Umfangsrichtung verteilt angeordneten Laschen versehen, die aufgrund der Flexibilität relativ zueinander bewegt und somit dazu verwendet werden können, den Endabschnitt an der Hülle oder Wandung des anderen Verbindungsabschnitts zu befestigen, beispielsweise durch Vernähen, Verkleben oder Verschweißen.

Es hat sich herausgestellt, dass bei entsprechender Dimensionierung insbesondere der Länge der Schlitze bzw. Einschnitte in den Verbindungsabschnitten eine zum Zwecke des Aufblasens eines oder mehrerer Luftsäcke vollkommen ausreichend gasdichte Verbindung zwischen den Verbindungsabschnitten erreicht werden kann, die nicht notwendigerweise weitere Abdichtmaßnahmen erfordert.

Die Erfindung wird im Folgenden beispielhaft unter Bezugnahme auf die Zeichnung beschrieben. Es zeigen:
- Fig. 1: einen schematischen Überblick über mögliche Einsatzbereiche von erfindungsgemäßen gasdichten Verbindungen in einer Luftsackanordnung,
- Fig. 2a und 2b: ein Ausführungsbeispiel einer erfindungsgemäßen gasdichten Verbindung bzw. eines Teils einer erfindungsgemäßen Gasleitungsanordnung in einer dreidimensionalen Aufblaskonfiguration (Fig. 2a) und in einer flachen, zweidimensionalen Montagekonfiguration (Fig. 2b),
- Fig. 3a, 3b und 3c: Detailansichten der gasdichten Verbindung von Fig. 2a und 2b,
- Fig. 4: gemäß einem Ausführungsbeispiel der Erfindung zwei flexible Verbindungsabschnitte in noch nicht miteinander verbundenem Zustand jeweils in einer flachen Montagekonfiguration,
- Fig. 5: in verschiedenen Ansichten die Verbindungsabschnitte von Fig. 4 im miteinander verbundenen Zustand, jedoch weiterhin in der flachen Montagekonfiguration,
- Fig. 6: eine perspektivische Ansicht der Verbindung von Fig. 5 in der Aufblaskonfiguration,
- Fig. 7: verschiedene Ansichten der Verbindung von Fig. 6,
- Fig. 8: eine erfindungsgemäße Luftsackanordnung, die von einer erfindungsgemäßen Verbindung bzw. einem erfindungsgemäßen Gasverteiler zum gleichzeitigen Aufblasen zweier Luftsäcke mittels eines einzigen Gasgenerators Gebrauch macht,
- Fig. 9a und 9b: ein weiteres Ausführungsbeispiel einer erfindungsgemäßen gasdichten Verbindung bzw. eines Teils einer erfindungsgemäßen Gasleitungsanordnung,
- Fig. 10a und 10b: die Anordnung von Fig. 9a und 9b mit zusätzlichen Abdeckungen,
- Fig. 11: verschiedene Ansichten der Anordnung von Fig. 10a und 10b,
- Fig. 12: die Anordnung von Fig. 9a und 9b mit einer alternativen zusätzlichen Abdeckung, und
- Fig. 13a und 13b: ein weiteres Ausführungsbeispiel der Erfindung.

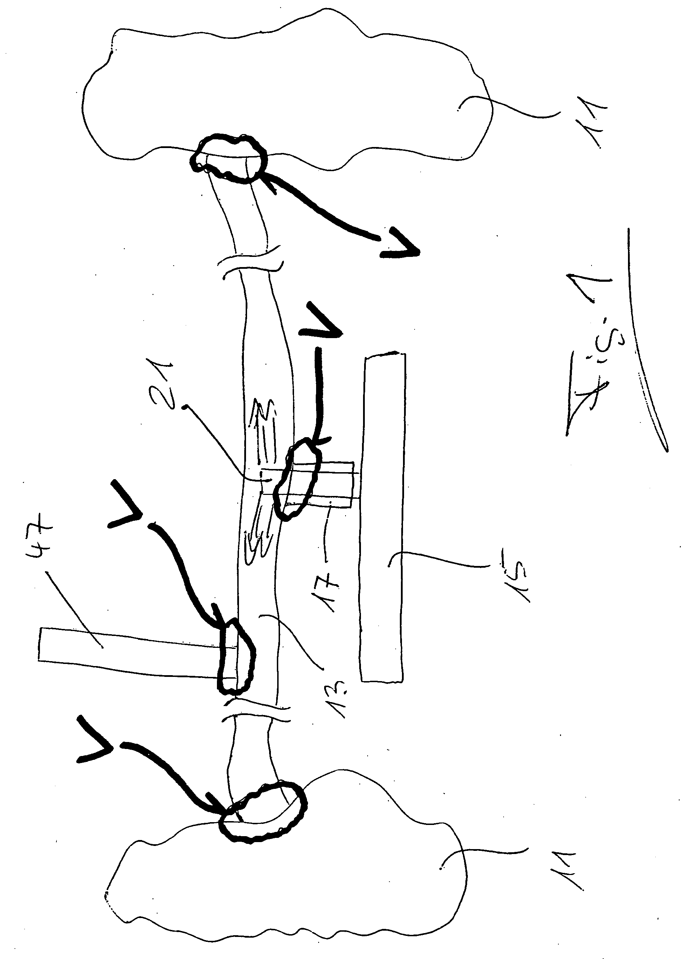

Die Übersicht der Fig. 1 zeigt schematisch eine erfindungsgemäße Luftsackanordnung, die zwei Luftsäcke 11, einen Gasgenerator 15, eine Gasleitung 13, ein Anschlussstück 17 sowie eine weitere Gasleitung 47 umfasst. Mit Ausnahme des Gasgenerators 15 handelt es sich bei diesen Komponenten 11, 13, 17 und 47 um solche Komponenten, die als mit Verbindungsabschnitten versehene, miteinander gasdicht zu verbindende Komponenten im Sinne der Erfindung und insbesondere im Sinne des unabhängigen Anspruchs 1 in Frage kommen. Dementsprechend sind die möglichen Stellen für erfindungsgemäße gasdichte Verbindungen V in Fig. 1 schematisch angedeutet. Folglich können die erfindungsgemäßen gasdichten Verbindungen jeweils zwischen der Gasleitung 13 und den Luftsäcken 11 bestehen, zur Anbindung des Anschlussstücks 17 an die Gasleitung 13 dienen sowie zur Verbindung zweier Gasleitungen 13 und 47 untereinander eingesetzt werden.

Das Anschlussstück 17 dient zur gasdichten Anbindung des Gasgenerators 15 an die zu den beiden Luftsäcken 11 führende Gasleitung 13, wobei sich ein insbesondere als Diffusor ausgebildeter Verteilerabschnitt 21 des Gasgenerators 15 durch das Anschlussstück 17 hindurch in die Gasleitung 13 hinein erstreckt. Über das freie, im Inneren der Gasleitung 13 liegende Ende des Diffusors 21 strömt vom Gasgenerator 15 freigegebenes Gas in entgegengesetzte Richtungen aus, um gleichzeitig beide Luftsäcke 11 aufzublasen. Die eine erfindungsgemäße gasdichte Verbindung V aufweisende Anordnung aus Anschlussstück 17 und Gasleitung 13 bildet auf diese Weise einen erfindungsgemäßen Gasverteiler, der es ermöglicht, mittels lediglich eines einzigen Auslasses des Gasgenerators 15 gleichzeitig zwei Luftsäcke 11 aufzublasen.

Bei der Gasleitung 13 handelt es sich um einen einstückigen, durchgehenden Schlauch von grundsätzlich beliebiger Länge aus einem flexiblen Textilmaterial, wie es auch zur Herstellung der Luftsackhüllen der Luftsäcke 11 verwendet wird.

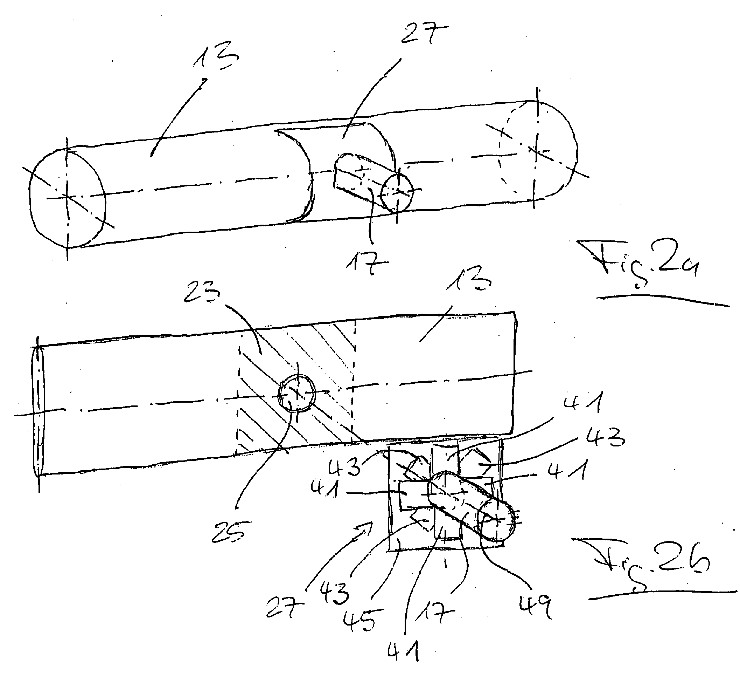

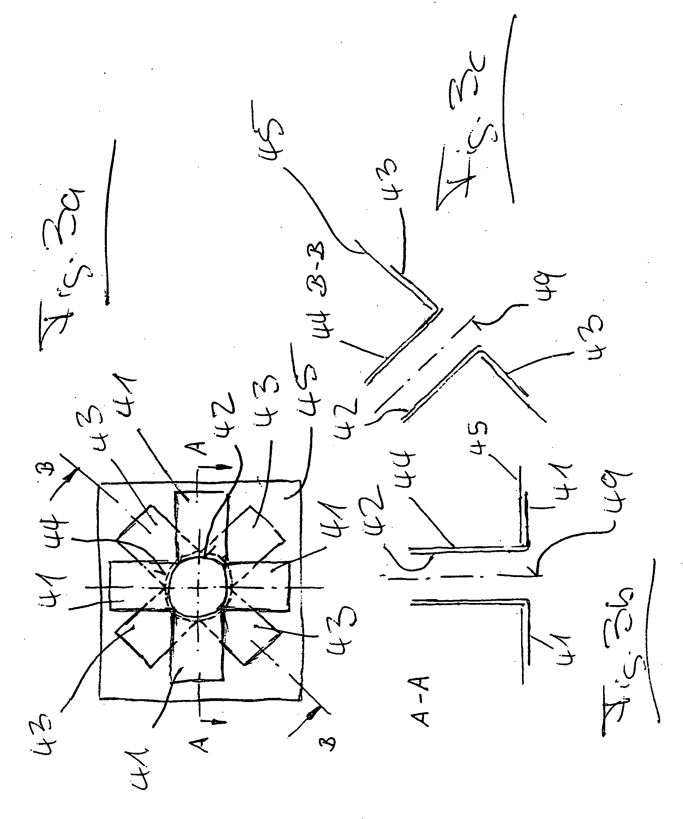

Die Fig. 2a und 2b sowie 3a bis 3c zeigen ein bevorzugtes Ausführungsbeispiel für die Ausgestaltung einer gasdichten Verbindung, hier am Beispiel der Anbindung eines Anschlussstücks 17 an eine Gasleitung 13. Grundsätzlich ist jedoch die hier erläuterte gasdichte Verbindung zwischen beliebigen Komponenten herstellbar, wie sie vorstehend erwähnt sind. So kann beispielsweise die in der Wandung der Gasleitung 13 ausgebildete Öffnung 25 (Fig. 2b) alternativ auch in der Hülle eines Luftsacks ausgebildet sein und zur Anbindung einer Gasleitung an diesen Luftsack dienen.

Fig. 2a zeigt die Aufblaskonfiguration. Das schlauchartige, auch als Stutzen bezeichnete Anschlussstück 17 ist auf die Wandung der Gasleitung 13 aufgesetzt, wobei ein offenes Ende des Anschlussstücks 17 mit der bereits erwähnten, in der Wandung der Gasleitung 13 ausgebildeten Öffnung 25 (Fig. 2b) ausgerichtet ist. Der Verbindungsabschnitt 23 der Gasleitung 13 wird von einem die Öffnung 25 begrenzenden Wandungsbereich gebildet, der in Fig. 2b schraffiert dargestellt ist. Dieser Wandungsbereich dient als Klebefläche für den Verbindungsabschnitt 27 des Anschlussstücks 17.

Dieser Verbindungsabschnitt 27, der auf den die Öffnung 25 begrenzenden Wandungsbereich 23 der Gasleitung 13 geklebt wird, umfasst zwei gegeneinander verdrehte Gruppen von Laschen 41, 43, auf deren Herstellung bzw. Konfiguration nachstehend näher eingegangen wird, sowie eine auch als Flansch bezeichnete zusätzliche Abdeckung 45.

Wie insbesondere die Fig. 3a bis 3c zeigen, ist das Anschlussstück 17 aus einem rohr- bzw. schlauchförmigen Ausgangsstück entstanden, das zweiwandig ausgebildet ist und eine innere Wandung 42 sowie eine äußere Wandung 44 aufweist. Beide Wandungen 42, 44 sind ausgehend von einem freien Ende mit parallel zur Mittelachse 49 verlaufenden Einschnitten versehen, die alle die gleiche Länge aufweisen, so dass sich jede Wandung 42, 44 im Bereich des freien Endes unter Bildung von Laschen 41 bzw. 43 gewissermaßen auffächert.

Die Positionen der Einschnitte sind derart gewählt, dass an jeder Wandung 42, 44 eine Gruppe von vier Laschen 41 bzw. 43 entsteht, die in Umfangsrichtung gleichmäßig verteilt, d.h. jeweils um 90° beabstandet, angeordnet sind. Die beiden Laschenkreuze 41, 43 sind dabei gegeneinander um 45° verdreht, so dass jeweils eine Lasche der einen Gruppe den Bereich zwischen zwei benachbarten Laschen der anderen Gruppe gasdicht abdeckt.

Zusätzlich ist eine Abdeckung in Form eines aus dem gleichen Material wie das Anschlussstück 17 bestehenden Flansches 45 vorgesehen, der - vom Anschlussstück 17 aus betrachtet - über den Laschenkreuzen 41, 43 liegt und somit unter Zwischenlage der Laschenkreuze 41, 43 mit dem Verbindungsabschnitt 23 der Gasleitung 13, also mit dem die Öffnung 25 begrenzenden Wandungsbereich, verklebt wird. Der Flansch 45 sitzt somit gewissermaßen wie ein "Pflaster" auf den Laschenkreuzen 41, 43, die von dem Flansch 45 vollständig abgedeckt sind.

Eine unmittelbare Klebeverbindung mit dem die Öffnung 25 der Gasleitung 13 begrenzenden Wandungsbereich 23 besteht also mit den Laschen 41 der inneren Wandung 42, in den Bereichen zwischen den inneren Laschen 41 mit den Laschen 43 der äußeren Wandung 44 und in den nicht von den Laschen 41, 43 eingenommenen Bereichen mit der Abdeckung 45. Fig. 3a zeigt eine Ansicht auf das Anschlussstück 17 samt Abdeckung 45 aus Richtung der Gasleitung 13, d.h. die Laschen 41 der inneren Wandung 42 überdecken teilweise die Laschen 43 der äußeren Wandung 44.

Die Endpunkte der zur Entstehung der Laschen 41, 43 führenden Einschnitte in den Wandungen 42, 44 liegen auf einem Kreis, der die Begrenzung des offenen Endes des Anschlussstücks 17 definiert, das im mit der Gasleitung 13 verbundenen Zustand gemäß Fig. 2a mit der in der Gasleitung 13 ausgebildeten Öffnung 25 (Fig. 2b) ausgerichtet ist.

Eine Besonderheit dieser Ausführungsform, die auch bei den nachstehend erläuterten Ausführungsbeispielen gegeben ist, besteht darin, dass alle Fertigungsprozesse, insbesondere die Herstellung der Verbindung zwischen den beiden Komponenten (Gasleitung 13 einerseits und Anschlussstück 17 andererseits), in einer zweidimensionalen Situation erfolgen können. Sowohl der Verbindungsabschnitt 23 der Gasleitung 13 als auch der Verbindungsabschnitt 27 des Anschlussstücks 17 sind bei der Herstellung der Verbindung flach (Fig. 2b), wobei in der End- bzw. Aufblaskonfiguration (Fig. 2a) eine dreidimensionale Konfiguration vorhanden ist. Eine weitere Besonderheit besteht hier darin, dass das Anschlussstück 17 bei der Herstellung der Verbindung mit der Gasleitung 13 gewissermaßen in einer "2,5-dimensionalen" Konfiguration vorliegt bzw. vorliegen kann, da der Verbindungsabschnitt 27 flach ist, der Rest des Anschlussstücks 17 dagegen in einer dreidimensionalen Konfiguration vorliegt bzw. vorliegen kann.

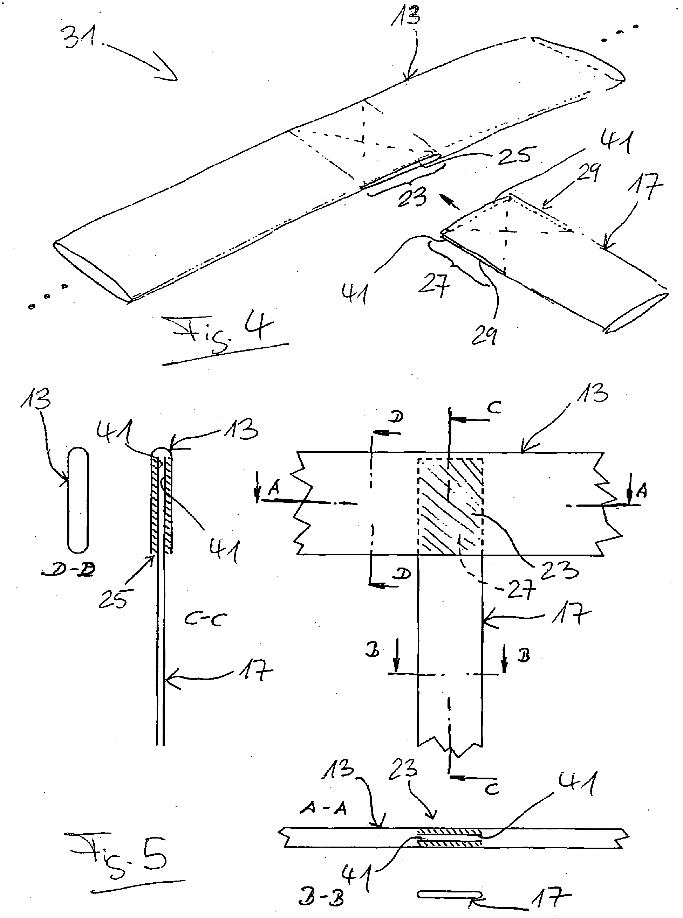

Die Fig. 4 bis 7 illustrieren die Erfindung an einem anderen Beispiel eines flexiblen Gasverteilers 31, der von der erfindungsgemäßen Verbindung zwischen zwei flexiblen Verbindungsabschnitten 23, 27 zweier Komponenten einer Luftsackanordnung für Kraftfahrzeuge Gebrauch macht.

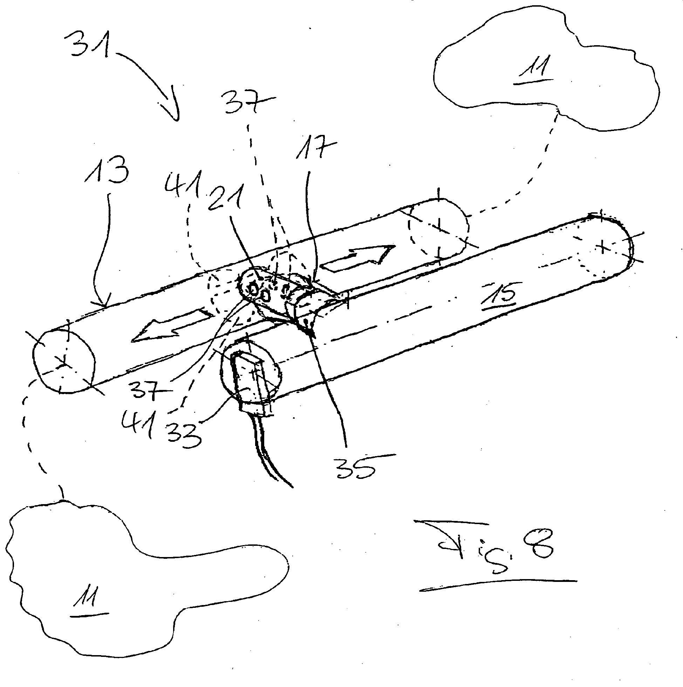

Bei der einen Komponente handelt es sich um eine lediglich teilweise dargestellte Gasleitung 13 z.B. in Form eines Gewebe- oder Textilschlauches, wobei die Gasleitung 13 auch von einem Schlauch oder einer Röhre aus einem ausreichend flexiblen, biegsamen und/oder weichen Kunststoffmaterial gebildet werden kann. Die andere Komponente 17 ist ebenfalls ein Gewebe-, Textil- oder Kunststoffschlauch, dessen Durchmesser demjenigen der Gasleitung 13 entsprechen oder von diesem abweichen kann. Die Komponente 17 wird im Folgenden auch als Anschlussstück bezeichnet, da sie für die Gasdichtigkeit des erfindungsgemäßen Gasverteilers 31 im Bereich der Anbindung eines Gasgenerators 15 (vgl. Fig. 8) an die Gasleitung 13 dient, worauf nachstehend näher eingegangen wird.

Die Hülle oder Wandung der Gasleitung 13 ist mit einer insbesondere durch Einschneiden hergestellten schlitzförmigen Öffnung 25 versehen, die sich hier parallel zu einer Längsachse der Gasleitung 13 erstreckt, wobei auch ein schräger oder senkrechter Verlauf des Schlitzes 25 möglich ist. Zur Herstellung der Verbindung wird in dem hier dargestellten Ausführungsbeispiel ein als Verbindungsabschnitt dienender Endabschnitt 27 des Anschlussstücks 17 in den Schlitz 25 eingeführt, was die in Fig. 5 dargestellte Anordnung zur Folge hat.

Die Länge des Schlitzes 25 ist auf die Breite des Anschlussstücks 17 im flachen, zusammengedrückten Montagezustand gemäß Fig. 4 abgestimmt. Der Endabschnitt 27 ist mit zwei einander gegenüberliegenden, vom offenen Ende des Endabschnitts 27 ausgehenden seitlichen Einschnitten 29 versehen. Durch diese geschlitzte Ausführung des Endabschnitts 27 entstehen zwei lappen- oder laschenartige Wandungsbereiche 41. Die Länge der Einschnitte, Schlitze oder Öffnungen 29 des Endabschnitts 27, die hier parallel zur Längsachse des Anschlussstücks 17 verlaufen, wobei aber auch ein schräger oder senkrechter Verlauf möglich ist, ist auf die Breite des Leitungsabschnitts 13 im flachen Montagezustand gemäß Fig. 4 abgestimmt.

Die Schlitze können durch Einschneiden des Materials oder auch durch Materialwegnahme hergestellt werden.

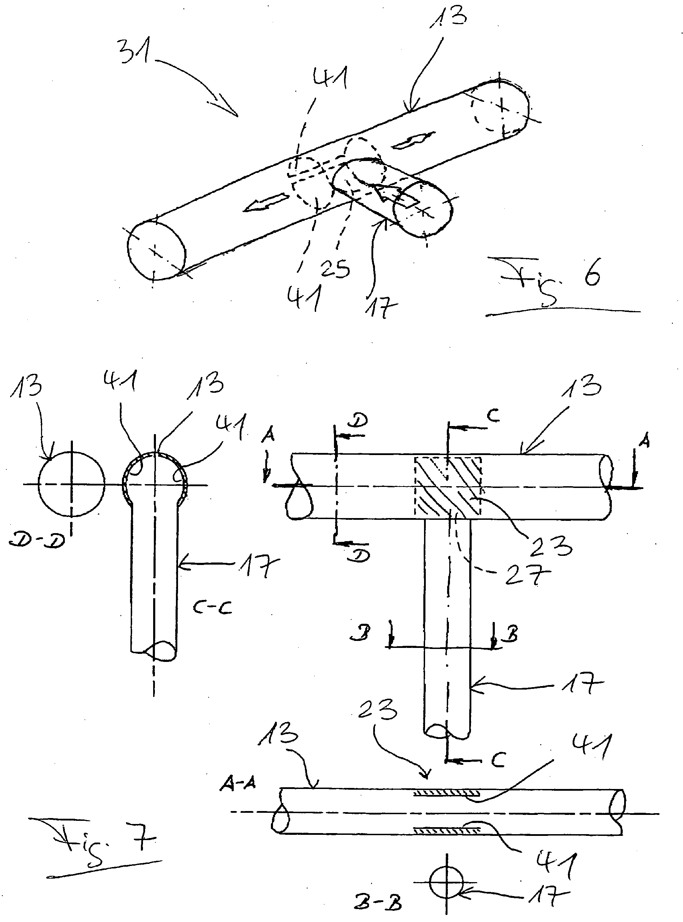

Die Laschen 41 dienen zur Befestigung des Endabschnitts 27 am Verbindungsabschnitt 23 der Gasleitung 13. Die Befestigung erfolgt beispielsweise durch Verkleben, Vernähen oder Verschleißen. In Fig. 5 und 7 sind z.B. Klebeflächen bzw. das verwendete Klebemittel durch Schraffuren angedeutet. Die Laschen 41 des Anschlussstücks 17 werden mit ihrer Außenseite an die Innenwand der Gasleitung 13 im Bereich des Verbindungsabschnitts 23 z.B. geklebt. Hierdurch wird eine mechanisch feste und - wie sich herausgestellt hat - ausreichend gasdichte Verbindung zwischen dem Anschlussstück 17 und der Gasleitung 13 erzielt.

Die auf diese Weise gebildete Verbindung bzw. der hierdurch gebildete Gasverteiler 31 erstreckt sich in der Montagekonfiguration gemäß Fig. 4 und 5 praktisch ausschließlich in einer Ebene. Aufgrund der flachen Konfiguration kann der Gasverteiler extrem Platz sparend in einem Fahrzeug verbaut und z.B. in den Fahrzeughimmel integriert werden. Die flache, sozusagen zweidimensionale Konfiguration ermöglicht außerdem eine besonders einfache Herstellung der gasdichten Verbindung.

Wird der Gasverteiler 31 von mittels des Gasgenerators 15 freigegebenem Gas durchströmt, gelangt er automatisch in die Aufblaskonfiguration gemäß Fig. 6 und 7, in der das Anschlussstück 17 und die Gasleitung 13 eine röhren- bzw. schlauchförmige Konfiguration einnehmen, die mit ausreichendem Strömungsquerschnitt einen Transport des Gases an einen jeweiligen Zielort ermöglichen. Die innenliegende Anordnung der Befestigungslaschen 41 hat den Vorteil, dass über das Anschlussstück 17 in die Gasleitung 13 einströmendes Gas an der Innenwand keinen sich in strömungstechnischer Hinsicht nachteilig auswirkenden Hindernissen ausgesetzt ist.

Alternativ zu der in den Fig. 4 bis 7 dargestellten Ausführungsform ist es auch möglich, die Gasleitung 13 mit den beiden Befestigungslaschen 41 außen zu umgreifen und die Laschen 41 auf der von dem Anschlussstück 17 abgewandten Seite der Gasleitung 13 beispielsweise durch Verkleben, Vernähen oder Verschweißen miteinander zu verbinden. Auch auf diese Weise lassen sich ein sicherer mechanischer Halt des Anschlussstücks 17 an der Gasleitung 13 sowie ein in strömungstechnischer Hinsicht optimales und gegenüber der Umgebung gasdichtes Kommunizieren zwischen dem Anschlussstück 17 und der Verbindungsöffnung 25 der Gasleitung 13 erzielen.

Fig. 8 zeigt den erfindungsgemäßen Gasverteiler 31 zusammen mit zwei schematisch angedeuteten Luftsäcken 11 und einem Gasgenerator 15, der dazu dient, im Bedarfsfall die beiden Luftsäcke 11 gleichzeitig aufzublasen.

Der die Gasleitung 13 bildende durchgehende flexible Schlauch verbindet die beiden Luftsäcke 11 miteinander. Die hier lediglich schematisch dargestellte Anbindung der Endabschnitte der Gasleitung 13 an die Luftsäcke 11 erfolgt vorzugsweise mittels der erfindungsgemäßen gasdichten Verbindung, wie sie vorstehend anhand der Fig. 4 bis 7 erläutert ist. Dabei bilden die beiden jeweils mit einem Luftsack 11 verbundenen Enden der Gasleitung 13 jeweils einen Endabschnitt, wie er vorstehend in Verbindung mit dem Anschlussstück 17 erwähnt ist, während eine schlitzförmige Öffnung entsprechend der vorstehend erwähnten Öffnung 25 jeweils in dem Luftsack 11 ausgebildet ist, um den betreffenden Endabschnitt der Gasleitung 13 aufnehmen zu können.

Insbesondere bei der Anbindung einer Gasleitung 13 an einen Luftsack 11 ergibt sich ein weiterer Vorteil der erfindungsgemäßen Verbindung. Es lässt sich auf besonders einfache Weise das Einblas- oder Aufblasverhalten des Luftsacks 11 dadurch beeinflussen, dass ein oder mehrere Parameter der Steck-/ Schlitz-Verbindung variiert werden. So kann beispielsweise eingestellt werden, wie tief der Endabschnitt der Gasleitung 13 in den Luftsack 11 hineinragt. Des Weiteren kann der Winkel, unter welchem die Gasleitung 13 im Bereich ihres mit dem Luftsack 11 verbundenen Endes relativ zum Luftsack 11 verläuft, an die jeweiligen Gegebenheiten angepasst werden. Diejenige Stelle innerhalb des Luftsacks 11, an welcher das Gas aus dem Ende der Gasleitung 13 austritt, kann so praktisch beliebig innerhalb des Luftsacks 11 positioniert werden. Des Weiteren ist es möglich, das im Luftsack 11 befindliche Ende der Gasleitung 13 hinsichtlich des Austretens des Gases unterschiedlich auszugestalten. Beispielsweise kann das Ende der Gasleitung 13 stirnseitig geschlossen und seitlich mit ein oder mehreren, beispielsweise schlitzförmigen, Gasaustrittsöffnungen versehen sein. Hierdurch ergeben sich insgesamt vielfältige Variationsmöglichkeiten, um das Gasaustrittsverhalten zu beeinflussen.

Der Gasgenerator 15 weist einen einzigen Gasauslass auf, von dem ein als Diffusor ausgebildeter Verteilerabschnitt 21 ausgeht. Im Bereich seines Gasaustrittsendes ist der stirnseitig geschlossene Diffusor, insbesondere auf einander diametral gegenüberliegenden Seiten, jeweils mit einer Vielzahl von Gasaustrittsöffnungen 37 versehen, von denen hier der Einfachheit halber jeweils nur zwei dargestellt sind. Die Gasaustrittsöffnungen 37 sind derart ausgerichtet, dass im Ergebnis zwei einander entgegengerichtete Gasströme entstehen. Der Gasgenerator 15 ist hierdurch schubneutral ausgeführt, da nach dem Auslösen des Gasgenerators 15 das Gas aus dem Verteilerabschnitt 21 in einander entgegengesetzte Richtungen austritt.

Der Gasgenerator 15 ist mit seinem Verteilerabschnitt 21 derart in dem erfindungsgemäßen flexiblen Gasverteiler 31 angeordnet, dass die Gasaustrittsöffnungen 37 des Diffusors mit der Längsachse der Gasleitung 13 ausgerichtet sind.

Die Gasdichtigkeit der Anbindung des Gasgenerators 15 an die Gasleitung 13 wird durch das Anschlussstück 17 sichergestellt, das über den Verteilerabschnitt 21 gezogen ist und generatorseitig mittels einer Dichtschelle 35 gasdicht am Verteilerabschnitt 21 bzw. am Gasauslass des Gasgenerators 15 anliegt.

Das gleichzeitige Aufblasen der beiden Luftsäcke 11 erfolgt dadurch, dass im Bedarfsfall der bevorzugt als so genannter Kaltgasgenerator ausgebildete Gasgenerator 15 mit einem Auslösesignal beaufschlagt wird, was über einen elektrischen Anschluss 33 erfolgt. Hierdurch wird ein innerhalb des Gasgenerators 15 befindlicher Treibsatz gezündet, der letztlich eine vorhandene, unter hohem Druck stehende Gasmenge freigibt, so dass das Gas schlagartig über den Gasauslass und den Diffusor 21 durch die Gasaustrittsöffnungen 37 nach außen strömt. Über die Gasleitung 13 wird hierbei somit beiden Luftsäcken 11 gleichzeitig das mittels des Gasgenerators 15 freigegebene Gas zugeführt. Die beiden Luftsäcke 11 sind also gerade nicht an verschiedene Gasauslässe eines Gasgenerators angeschlossen, die unabhängig voneinander und insbesondere zeitlich nacheinander mit Gas beaufschlagt werden können. Vielmehr zeichnet sich die erfindungsgemäße Luftsackanordnung hier dadurch aus, dass mit einem einzigen Treibsatz und einer einzigen "Gasladung", d.h. somit gewissermaßen "auf einen Schlag", beide Luftsäcke 11 gleichzeitig mit Gas gefüllt werden. Der Einsatz reiner pyrotechnischer Gasgeneratoren oder so genannter Hybrid-Gasgeneratoren ist erfindungsgemäß ebenfalls möglich. Die Verwendung von Kaltgas, das z.B. Helium umfasst, wird als vorteilhaft insofern angesehen, als durch Hitzeeinwirkung bedingte Nachteile vermieden werden und ein besseres dynamisches Verhalten hinsichtlich der Gasströmung erzielt werden kann.

In einer alternativen Ausgestaltung der Erfindung ist es auch möglich, dass ein einziger, mittels eines einzigen Auslösesignals über den Anschluss 33 zündbarer Treibsatz ein Gasvolumen freigegeben, das gleichzeitig über zwei oder mehrere Gasauslässe aus dem Gasgenerator 15 austritt und durch entsprechende Ausbildung einer gemeinsamen oder geteilten Diffusoranordnung gleichzeitig zwei an eine gemeinsame oder jeweils an eine eigene Gasleitung angeschlossene Luftsäcke 11 aufbläst. Auch eine solche Ausgestaltung wird im Rahmen dieser Anmeldung als ein gemeinsamer oder einziger Gasauslass des Gasgenerators im Sinne der Erfindung angesehen, da ein Aspekt der Erfindung das gleichzeitige Aufblasen zweier oder mehrerer Luftsäcke ist.

Wie im Einleitungsteil erwähnt, kann auch der Verteilerabschnitt bzw. Diffusor 21 und insbesondere der gesamte innerhalb des erfindungsgemäßen flexiblen Verteilers 31 befindliche Abschnitt des Gasgenerators 15 derart verformbar ausgebildet sein, dass nach dem Auslösen des Gasgenerators 15 das ausströmende Gas den insbesondere aus Metall bestehenden Diffusor 21 bzw. den erwähnten gesamten Abschnitt aus einer Platz sparenden zusammengedrückten Einbaukonfiguration in eine Aufblaskonfiguration mit vergrößertem Strömungsquerschnitt überführt, gewissermaßen also entfaltet oder aufdrückt. Mit Ausnahme des Gasgenerators 15 selbst ist somit das gesamte Gasleitungssystem aus Diffusor 21, Anschlussstück 17 und Gasleitung 13 im Ausgangszustand von flächiger Gestalt, was den Platzbedarf innerhalb des Fahrzeugs minimiert.

Besonders vorteilhaft ist die Erfindung in Luftsackanordnungen einsetzbar, die zwei räumlich getrennt anzuordnende Seiten- oder "Roof-Rail"-Airbags aufweisen, welche jeweils im Ausgangszustand im Bereich des Übergangs zwischen Fahrzeugdach und Fahrzeugseitenwand angeordnet sind und sich vorhangartig nach unten entfalten können, um für die Insassen einen sich über eine relevante Länge der Fahrzeugs erstreckenden Seitenschutz zu bilden. Derartige Seitenairbags werden derzeit jeweils mit einem eigenen Gasgenerator versehen, was relativ hohe Herstellungskosten bedeutet und außerdem deshalb als störend empfunden wird, da der Gasgenerator im Bereich des Übergangs zwischen Fahrzeugdach und Fahrzeugseitenwand in den meisten Fällen nur so montiert werden kann, dass er in das Fahrzeuginnere hineinragt.

Da mit der Erfindung ein flach bauendes, im Montagezustand nicht auftragendes Gasleitungssystem realisierbar ist, kann in dem hier geschilderten Anwendungsfall eine Anordnung beispielsweise gemäß Fig. 8 mit einem einzigen Gasgenerator vorgesehen werden, der über eine Gasleitung gleichzeitig beide Seitenairbags versorgt. Die im Montagezustand flache Gasleitung kann einfach in den Fahrzeughimmel integriert und somit am Fahrzeugdach entlang geführt werden. Für den Gasgenerator kann in diesem Fall eine bezüglich der Fahrzeugquerrichtung mittige Anordnung beispielsweise an einem hinteren Querträger vorgesehen werden. Dieser Einbauort ermöglicht es, ein Hineinragen des Gasgenerators in den Fahrzeugraum zu vermeiden. Die Reduzierung auf lediglich einen Gasgenerator und damit lediglich eine Anschlusselektrik und Auslöseelektronik führt zu einer erheblichen Senkung der Herstellungskosten.

Ein Aspekt der Erfindung, der auch unabhängig beansprucht wird, ist die Anordnung eines Verteilerabschnitts in einem Gasleitungssystem, wobei der Verteilerabschnitt an den Gasauslass eines Gasgenerators anschließbar oder angeschlossen ist und über den das Gas gleichzeitig in wenigstens zwei unterschiedliche, insbesondere einander entgegengesetzte, Richtungen strömen kann. Bei dem Gasleitungssystem kann es sich einfach um eine, insbesondere durchgehende und/oder einstückige, Gasleitung handeln, die insbesondere flexibel, biegsam und/oder weich ausgebildet sein kann, um aus der flachen Montagekonfiguration in die Aufblaskonfiguration gelangen zu können. Insofern ist das vorstehend beschriebene Anschlussstück 17 für die Gasverteilung an sich nicht zwingend erforderlich. Das Anschlussstück 17 kann jedoch auf besonders einfache und zuverlässige Weise für die Gasdichtigkeit der Gasleitung sorgen, wobei diese prinzipiell aber auch auf andere Art und Weise ohne das Anschlussstück 17 gewährleistet werden kann.

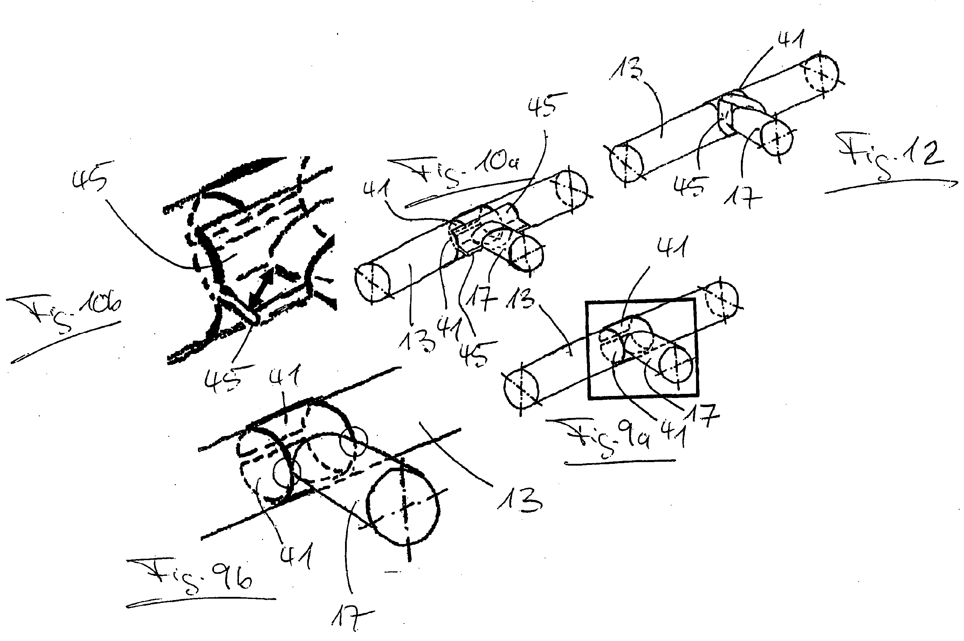

Die Fig. 9 bis 12 zeigen Weiterbildungen der Erfindung, bei denen zusätzliche Maßnahmen getroffen sind, um die Gasdichtigkeit der Verbindung zwischen den beiden Komponenten 13, 17 in Abhängigkeit von den jeweiligen Anforderungen aufgrund der Druckverhältnisse zu verbessern.

In Fig. 9b, die einen vergrößerten Ausschnitt aus Fig. 9a zeigt, sind mit zwei Kreisen die potentiell hinsichtlich der Gasdichtigkeit kritischen Bereiche angedeutet. In diesen Bereichen findet keine Überlappung zwischen Gasleitung 13 einerseits und Anschlussstück 17 andererseits statt. Um eine ausreichende Gasdichtigkeit zu erzielen, wird in dem Ausführungsbeispiel der Fig. 10a und 10b vorgeschlagen, zwei zusätzliche Abdeckungen 45 vorzusehen, die im nicht dargestellten Ausgangszustand, in welchem sowohl die Gasleitung 13 als auch das Anschlussstück 17 jeweils die flache Montagekonfiguration einnehmen, jeweils nach Art eines "Pflasters" so auf die Verbindung zwischen Anschlussstück 17 und Gasleitung 13 geklebt werden, dass der Übergangsbereich abgedeckt ist, d.h. eine Überlappung der in diesem Ausführungsbeispiel rechteckigen Abdeckelemente 45 sowohl mit der Gasleitung 13 als auch dem Anschlussstück 17 erfolgt. Die beiden Abdeckstücke 45 werden dabei auf einander gegenüber liegenden Seiten aufgeklebt, so dass die beiden Abdeckstücke 45 bereichsweise direkt miteinander verklebt sind.

In Fig. 10b, die einen vergrößerten Ausschnitt der Fig. 10a zeigt, ist mit einem Pfeil der Weg angedeutet, den das Gas durch die unmittelbar miteinander verklebten Bereiche der Abdeckungsstücke 45 ausgehend von dem potentiell kritischen Bereich, wie er in Verbindung mit Fig. 9b erwähnt wurde, nehmen müsste, um aus der Verbindung zwischen Gasleitung 13 und Anschlussstück 17 auszutreten. Untersuchungen haben ergeben, dass der Gasdruck nicht hoch genug ist, um auf diesem Weg durch die beiden unmittelbar miteinander verklebten Abdeckungen 45 hindurch gelangen zu können. Folglich sorgt dieses "Doppelpflaster"-Prinzip für eine ausreichende Gasdichtigkeit im Bereich des Übergangs zwischen Anschlussstück 17 und Gasleitung 13.

Ein Vorteil dieser Abdichtung durch Überlappung ist wiederum, dass die Abdeckstücke 45 bei in der flachen Montagekonfiguration befindlicher Anordnung aus Anschlussstück 17 und Gasleitung 13 aufgebracht werden können, und zwar gleichzeitig mit dem Verbinden der Laschen 41 des Anschlussstücks 17 mit der Gasleitung 13.

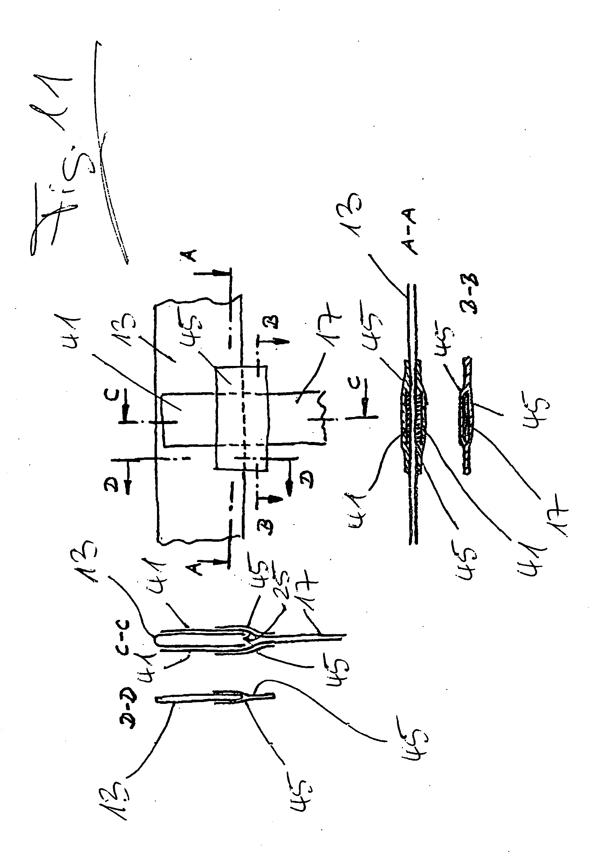

Diese "Doppelpflaster"-Anordnung ist außerdem in Fig. 11 in einer Draufsicht und in verschiedenen Schnittansichten dargestellt.

Eine alternative Möglichkeit, eine Abdichtung durch Überlappung mittels eines zusätzlichen Abdeckelementes 45 zu erzielen, ist in Fig. 12 dargestellt. Hierbei sind die mangels Überlappung potentiell kritischen Bereiche (vgl. Ausführungen zu Fig. 9b) durch ein streifen- oder bandförmiges Abdeckelement 45 abgedichtet, das nach Art eines Schals um den Übergangsbereich zwischen Anschlussstück 17 und Gasleitung 13 gelegt und mit diesen Komponenten verklebt ist. Das Aufkleben eines derartigen band- oder streifenförmigen Abdeckelementes 45 erfolgt im dreidimensionalen Zustand, also wenn die Gasleitung 13 und das Anschlussstück 17 aufgeblasen ist. Das Verkleben der Laschen 41 des Anschlussstücks 17 mit der Gasleitung 13 erfolgt dagegen in der flachen Montagekonfiguration der Komponenten 17, 13, so dass insgesamt hier hinsichtlich der Dimensionalität eine "gemischte" Herstellung der gasdichten Verbindung erfolgt.

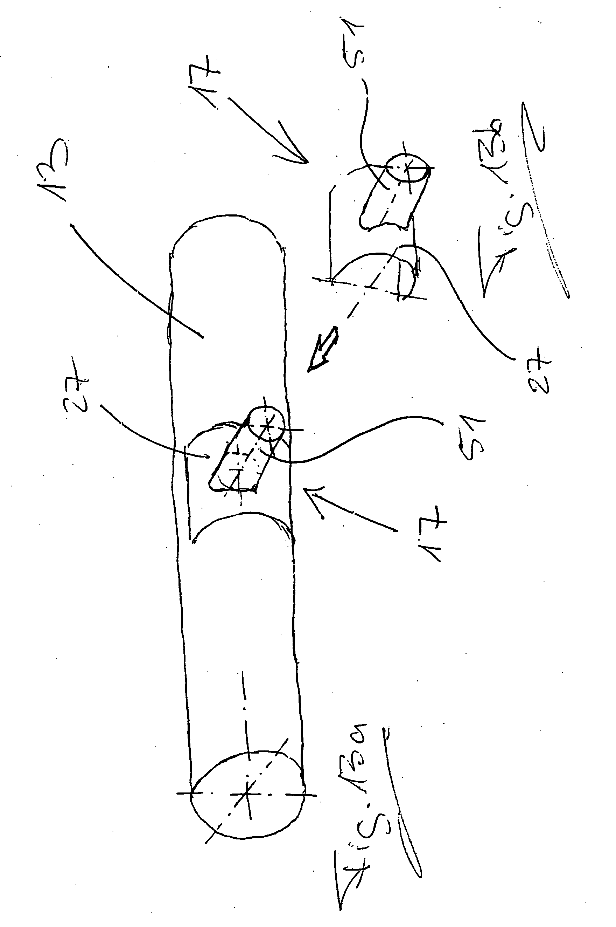

In dem weiteren Ausführungsbeispiel gemäß Fig. 13a und 13b ist das Anschlussstück 17 mit einem auch als Flansch bezeichneten Verbindungsabschnitt 27 versehen, der über den gesamten Umfang derart mit einem Stutzen 51 des Anschlussstücks 17 verbunden ist, dass der Übergang zwischen Stutzen 51 und Verbindungsabschnitt 27 vollständig geschlossen ist. Anders als bei den vorstehend beschriebenen Einzellaschen-Lösungen existieren hier somit keine hinsichtlich der Gasdichtigkeit potentiell kritischen Bereiche.

Der Verbindungsabschnitt 27 und der Stutzen 51 des Anschlussstücks 17 können einstückig miteinander verbunden sein. Bei dem Anschlussstück 17 kann es sich um ein einstückiges Kunststoffteil handeln, das im Wesentlichen formstabil ist, so dass die Verbindung mit der Gasleitung 13 in einer dreidimensionalen Konfiguration, d.h. bei aufgeblasener Gasleitung 13, erfolgt. Alternativ ist es zumindest prinzipiell denkbar, dieses einstückige Anschlussstück 17 aus einem flexiblen, biegsamen und/oder weichen Material auszubilden, insbesondere aus dem gleichen Material wie die vorstehend beschriebenen Komponenten, insbesondere die Gasleitung 13 und der Luftsack 11.

### Bezugszeichenliste

- 11: Luftsack
- 13: erste Komponente, Gasleitung
- 15: Gasgenerator
- 17: zweite Komponente, Anschlussstück
- 21: Verteilerabschnitt, Diffusor
- 23: Verbindungsabschnitt der Gasleitung
- 25: Öffnung, Schlitz
- 27: Verbindungsabschnitt des Anschlussstücks
- 29: seitliche Öffnung, Schlitz
- 31: Gasverteiler
- 33: elektrischer Anschluss
- 35: Dichtschelle
- 37: Gasaustrittsöffnung
- 41: Lasche
- 42: innere Wandung
- 43: Lasche
- 44: äußere Wandung
- 45: zusätzliche Abdeckung
- 47: Gasleitung
- 49: Mittelachse
- 51: Stutzen

- V: gasdichte Verbindung

## Patentansprüche

1. Gasleitungsanordnung
für in Kraftfahrzeugen eingesetzte Luftsackanordnungen, die wenigstens einen aufblasbaren Luftsack (11) und zumindest einen im am Fahrzeug montierten Zustand entfernt von dem Luftsack (11) angeordneten Gasgenerator (15) zum Aufblasen des Luftsacks (11) umfassen,
mit einer ersten Komponente (13) und einer zweiten Komponente (17), zwischen denen eine gasdichte Verbindung besteht, die von einem ersten Verbindungsabschnitt (23) der ersten Komponente (13) und einem zweiten Verbindungsabschnitt (27) der zweiten Komponente (17) gebildet ist,
wobei zumindest eine der beiden Komponenten als eine zumindest im Wesentlichen außerhalb des Luftsacks (11) verlaufende Gasleitung (13) ausgebildet ist, die eine freie Wegstrecke zwischen dem Gasgenerator (15) und dem Luftsack (11) überbrückt und über die der Luftsack (11) mittels des Gasgenerators (15) aufblasbar ist, und
wobei die Verbindungsabschnitte (23, 27) der beiden Komponenten (13, 17) jeweils derart, insbesondere flexibel, biegsam und/oder weich, ausgebildet sind, dass sie unter dem Einfluss von mittels des Gasgenerators (15) freigegebenem Gas aus einer flachen Montagekonfiguration in eine Aufblaskonfiguration gelangen können.

2. Gasleitungsanordnung nach Anspruch 1,
**dadurch gekennzeichnet,**
**dass** der Verbindungsabschnitt zumindest einer der beiden Komponenten (13, 17) von einem Schlauch gebildet ist.

3. Gasleitungsanordnung nach Anspruch 1 oder 2,
**dadurch gekennzeichnet,**
**dass** der Verbindungsabschnitt zumindest einer der beiden Komponenten (13, 17) aus einem Gewebe- oder Textilmaterial, insbesondere aus dem gleichen Material wie die Hülle des Luftsacks (11) oder aus einem gleichartigen Material, oder aus einem, insbesondere flexiblen, biegsamen und/oder weichen, Kunststoffmaterial hergestellt ist.

4. Gasleitungsanordnung nach einem der vorhergehenden Ansprüche,
**dadurch gekennzeichnet,**
**dass** die Verbindungsabschnitte (23, 27) der beiden Komponenten (13, 17) einander zumindest bereichsweise überlappen.

5. Gasleitungsanordnung nach einem der vorhergehenden Ansprüche,
**dadurch gekennzeichnet,**
**dass** die Verbindungsabschnitte (23, 27) der beiden Komponenten (13, 17) miteinander verklebt, vernäht und/ oder verschweißt sind.

6. Gasleitungsanordnung nach einem der vorhergehenden Ansprüche,
**dadurch gekennzeichnet,**
**dass** die Verbindungsabschnitte (23, 25) der beiden Komponenten (13, 17) in der Montagekonfiguration in parallel zueinander verlaufenden Ebenen liegen.

7. Gasleitungsanordnung nach einem der vorhergehenden Ansprüche,
**dadurch gekennzeichnet,**
**dass** der Verbindungsabschnitt zumindest einer der beiden Komponenten (13, 17) als eine den Übergang zwischen den beiden Komponenten (13, 17) abdichtende Abdeckung ausgebildet ist.

8. Gasleitungsanordnung nach einem der vorhergehenden Ansprüche,
**dadurch gekennzeichnet,**
**dass** die Wandung des Verbindungsabschnitts (23) der einen Komponente (13) eine Öffnung (25) für ein offenes Ende der anderen Komponente (17) aufweist.

9. Gasleitungsanordnung nach Anspruch 8,
**dadurch gekennzeichnet,**
**dass** der Verbindungsabschnitt (23) der einen Komponente (13) von die Öffnung (25) begrenzenden Wandungsbereichen gebildet ist.

10. Gasleitungsanordnung nach Anspruch 8 oder 9,
**dadurch gekennzeichnet,**
**dass** der Verbindungsabschnitt (27) der anderen Komponente (17) von mehreren Laschen (41, 43) gebildet ist, die am offenen Ende angeordnet sind und zumindest in der Montagekonfiguration in unterschiedliche Richtungen abstehen.

11. Gasleitungsanordnung nach Anspruch 10,
**dadurch gekennzeichnet,**
**dass** die Laschen (41, 43) einstückig mit der Komponente (17) ausgebildet sind.

12. Gasleitungsanordnung nach Anspruch 10 oder 11,
**dadurch gekennzeichnet,**
**dass** die Laschen (41, 43) durch Herstellen von vom freien Ende ausgehenden Einschnitten in der Wandung eines rohr- oder schlauchförmigen Ausgangsstücks entstanden sind.

13. Gasleitungsanordnung nach einem der Ansprüche 10 bis 12,
**dadurch gekennzeichnet,**
**dass** wenigstens eine Gruppe von Laschen (41) vorgesehen ist, die in Umfangsrichtung, insbesondere gleichmäßig, verteilt angeordnet sind, wobei insbesondere die Gruppe genau vier Laschen (41) umfasst.

14. Gasleitungsanordnung nach einem der Ansprüche 10 bis 13,
**dadurch gekennzeichnet,**
**dass** mehrere Gruppen, insbesondere genau zwei Gruppen, von Laschen (41, 43) vorgesehen sind, die in der Montagekonfiguration in parallel zueinander verlaufenden Ebenen liegen und derart gegeneinander verdreht oder versetzt sind, dass - in Umfangsrichtung betrachtet - jeweils eine Lasche (41, 43) der einen Gruppe zwischen zwei aufeinander folgenden Laschen (43, 41) der anderen Gruppe gelegen ist.

15. Gasleitungsanordnung nach einem der Ansprüche 10 bis 14,
**dadurch gekennzeichnet,**
**dass** die mit den Laschen (41, 43) versehene Komponente (17) mehrwandig ausgebildet ist, wobei eine Gruppe von Laschen (41) von einer inneren Wandung (42) und eine weitere Gruppe von Laschen (43) von einer äußeren Wandung (44) ausgeht.

16. Gasleitungsanordnung nach Anspruch 15,
**dadurch gekennzeichnet,**
**dass** die mit den Laschen (41, 43) versehene Komponente (17) zwei ineinander liegende Einzelkomponenten umfasst, von denen die eine die innere Wandung (42) und die andere die äußere Wandung (44) bildet.

17. Gasleitungsanordnung nach Anspruch 15,
**dadurch gekennzeichnet,**
**dass** die mit den Laschen (41, 43) versehene Komponente (17) durch Zusammenrollen oder Aufrollen eines flächigen Ausgangsstücks um mehr als 360°, insbesondere um wenigstens 720°, entstanden ist.

18. Gasleitungsanordnung nach einem der Ansprüche 10 bis 17,
**dadurch gekennzeichnet,**
**dass** wenigstens eine zusätzliche Abdeckung (45) vorgesehen ist, die unter zumindest teilweiser Zwischenlage der Laschen (41, 43) mit die Öffnung (25) begrenzenden Wandungsbereichen der einen Komponente (13) verbunden ist, insbesondere durch Verkleben, Vernähen und/oder Verschweißen.

19. Gasleitungsanordnung nach einem der vorhergehenden Ansprüche,
**dadurch gekennzeichnet,**
**dass** die gasdichte Verbindung zwischen der Gasleitung (13) als erster Komponente und einem Anschlussstück (17) als zweiter Komponente besteht, wobei das Anschlussstück (17) zur gasdichten Anbindung (15) des Gasgenerators an die Gasleitung (13) dient.

20. Luftsackanordnung für Kraftfahrzeuge mit
wenigstens einem aufblasbaren Luftsack (11),
zumindest einem im am Fahrzeug montierten Zustand entfernt von dem Luftsack (11) angeordneten Gasgenerator (15) zum Aufblasen des Luftsacks (11), und
wenigstens einer zumindest im Wesentlichen außerhalb des Luftsacks (11) verlaufenden Gasleitung (13), die eine freie Wegstrecke zwischen dem Gasgenerator (15) und dem Luftsack (11) überbrückt und über die der Luftsack (11) mittels des Gasgenerators (15) aufblasbar ist,
wobei die Gasleitung (13) ein Bestandteil einer Gasleitungsanordnung nach einem der vorhergehenden Ansprüche ist.

21. Verwendung einer Gasleitungsanordnung nach einem der Ansprüche 1 bis 19 in einer Luftsackanordnung für Kraftfahrzeuge, die wenigstens einen aufblasbaren Luftsack (11) und zumindest einen im am Fahrzeug montierten Zustand entfernt von dem Luftsack (11) angeordneten Gasgenerator (15) zum Aufblasen des Luftsacks (11) umfasst.

22. Verfahren zur Herstellung einer gasdichten Verbindung in einer Gasleitungsanordnung nach einem der Ansprüche 1 bis 19,
bei dem die Verbindungsabschnitte (23, 27) der beiden Komponenten (13, 17) in ihre flache Montagekonfiguration gebracht, übereinander gelegt und miteinander verbunden werden, insbesondere durch Verkleben, Vernähen und/oder Verschweißen.

23. Verfahren nach Anspruch 22,
**dadurch gekennzeichnet,**
**dass** zuvor in der Wandung des Verbindungsabschnitts (23) der einen Komponente (13) eine Öffnung (25) für ein offenes Ende der anderen Komponente (17) hergestellt wird, wobei der Verbindungsabschnitt (27) der anderen Komponente (17) bei mit der Öffnung (25) ausgerichtetem offenen Ende über die Öffnung (25) begrenzende Wandungsbereiche gelegt wird.

24. Verfahren nach Anspruch 22 oder 23,
**dadurch gekennzeichnet,**
**dass** den Verbindungsabschnitt (27) der anderen Komponente (17) bildende Laschen (41, 43) hergestellt werden, indem die Wandung eines rohr- oder schlauchförmigen Ausgangsstücks ausgehend vom freien Ende mehrfach eingeschnitten wird.

25. Verfahren nach einem der Ansprüche 22 bis 24,
**dadurch gekennzeichnet,**
**dass** das Ausgangsstück mehrwandig ausgebildet wird, wobei in einer inneren Wandung (42) eine erste Gruppe von Laschen (41) und in einer äußeren Wandung (44) eine zweite Gruppe von Laschen (43) hergestellt wird, wobei die Gruppen derart gegeneinander verdreht sind, dass - in Umfangsrichtung betrachtet - jeweils eine Lasche (41, 43) der einen Gruppe zwischen zwei aufeinander folgenden Laschen (43, 41) der anderen Gruppe liegt.

26. Verfahren nach Anspruch 25,
**dadurch gekennzeichnet,**
**dass** das mehrwandige Ausgangsstück durch Ineinanderanordnen mehrerer Einzelstücke hergestellt wird.

27. Verfahren nach Anspruch 25,
**dadurch gekennzeichnet,**
**dass** das mehrwandige Ausgangsstück durch Zusammenrollen oder Aufrollen eines flächigen Ausgangsstücks um mehr als 360°, insbesondere um wenigstens 720°, hergestellt wird.

28. Verfahren nach einem der Ansprüche 24 bis 27,
**dadurch gekennzeichnet,**
**dass** mit den die Öffnung (25) begrenzenden Wandungsbereichen der einen Komponente (13) unter zumindest teilweiser Zwischenlage der Laschen (41, 43) wenigstens eine zusätzliche Abdeckung (45) verbunden wird, insbesondere durch Verkleben, Vernähen und/oder Verschweißen.

## Claims

1. Gas conduit assembly
for airbag assemblies in motor vehicles including at least one inflatable airbag (11) and at least one inflator (15) arranged at a distance from the airbag (11), when installed on the vehicle, for inflating the airbag (11),
comprising a first component (13) and a second component (17), with a gastight connection therebetween formed of a first connecting section (23) of the first component (13) and a second connecting section (27) of the second component (17),
at least one of the two components is arranged as a gas conduit (13) running at least substantially outside the airbag (11), bridging an open distance between the inflator (15) and the airbag (11) and by which the airbag (11) is inflatable by means of the inflator (15), and wherein the connecting sections (23, 27) of the two components (13, 17) each are arranged such, in particular flexible, ductile and/or soft, that the sections can be brought from a flat assembly configuration to an inflating configuration under the influence of gas released by means of the inflator (15).

2. Gas conduit assembly according to claim 1,
**characterized in that**
the connecting section of at least one of the two components (13, 17) is formed of a tube.

3. Gas conduit assembly according to claim 1 or 2,
**characterized in that**
the connecting section of at least one of the two components (13, 17) is made from a fabric or textile material, in particular from the same material or from a similar material as the covering of the airbag (11), or from a plastic material, in particular flexible, ductile and/or soft.

4. Gas conduit assembly according to one of the preceding claims,
**characterized in that**
the connecting sections (23, 27) of the two components (13, 17) overlap each other at least partially.

5. Gas conduit assembly according to one of the preceding claims,
**characterized in that**
the connecting sections (23, 27) of the two components (13, 17) are glued, sewn and/or welded together.

6. Gas conduit assembly according to one of the preceding claims,
**characterized in that**
the connecting sections (23, 25) of the two components (13, 17) are arranged in parallel layers in the assembly configuration.

7. Gas conduit assembly according to one of the preceding claims,
**characterized in that**
the connecting section of at least one of the two components (13, 17) is formed as a cover sealing the transition between the two components (13, 17).

8. Gas conduit assembly according to one of the preceding claims,
**characterized in that**
the wall of the connecting section (23) of the one component (13) comprises an opening (25) for an open end of the other component (17).

9. Gas conduit assembly according to claim 8,
**characterized in that**
the connecting section (23) of the one component (13) is formed of wall areas bounding the opening (25).

10. Gas conduit assembly according to claim 8 or 9,
**characterized in that**
the connecting section (27) of the other component (17) is formed of several lugs (41, 43), which are arranged at the open end and project in different directions at least in the assembly configuration.

11. Gas conduit assembly according to claim 10,
**characterized in that**
the lugs (41, 43) are formed integral with the component (17).

12. Gas conduit assembly according to claim 10 or 11,
**characterized in that**
the lugs (41, 43) resulted from manufacturing cuts into the wall of a pipe or tubular original piece beginning from the free end.

13. Gas conduit assembly according to one of the claims 10 to 12,
**characterized in that**
at least a group of lugs (41) is provided, arranged spread in circumferential direction, in particular uniform, the group in particular including exactly four lugs (41).

14. Gas conduit assembly according to one of the claims 10 to 13,
**characterized in that**
several groups, in particular exactly two groups, of lugs (41, 43) are provided, which, in the assembly configuration, are arranged in parallel layers and are twisted or offset against each other such that - considered in circumferential direction - one lug (41, 43) of the one group is arranged between two consecutive lugs (43, 41) of the other group, respectively.

15. Gas conduit assembly according to one of the claims 10 to 14,
**characterized in that**
the component (17) provided with the lugs (41, 43) is formed multi-walled, wherein a group of lugs (41) originates from an inner wall (42) and another group of lugs (43) originates from an outer wall (44).

16. Gas conduit assembly according to claim 15,
**characterized in that**
the component (17) provided with the lugs (41, 43) includes two intertwined individual components, one forming the inner wall (42) and the other forming the outer wall (44).

17. Gas conduit assembly according to claim 15,
**characterized in that**
the component (17) provided with the lugs (41, 43) was formed by convolving or rolling up a planar original piece about more than 360°, in particular about at least 720°.

18. Gas conduit assembly according to one of the claims 10 to 17,
**characterized in that**
at least one additional cover (45) is provided, connected, in particular by gluing, sewing and/or welding, with wall areas of the one component (13) bounding the opening (25), the lugs (41, 43) being at least partially disposed in between.

19. Gas conduit assembly according to one of the preceding claims,
**characterized in that**
the gastight connection exists between the gas conduit (13) as the first component and a fitting (17) as the second component, wherein the fitting (17) serves for the gastight connection (15) of the inflator to the gas line (13).

20. Air bag assembly for motor vehicles, comprising:
at least one inflatable airbag (11),
at least one inflator (15) arranged at a distance from the airbag (11), when installed on the vehicle, for inflating the airbag (11), and
at least a gas conduit (13) running at least substantially outside the airbag (11), bridging an open distance between the inflator (15) and the airbag (11) and by which the airbag (11) is inflatable by means of the inflator (15),
wherein the gas conduit (13) is a component of a gas conduit assembly according to one of the preceding claims.

21. Usage of a gas conduit assembly according to one of the claims 1 to 19 in an air bag assembly for motor vehicles, including at least an inflatable airbag (11) and at least one inflator (15) arranged at a distance from the airbag (11), when installed on the vehicle, for inflating the airbag (11).

22. Method for establishing a gastight connection in a gas conduit assembly according to one of the claims 1 to 19, wherein the connecting sections (23, 27) of the two components (13, 17) are brought into their flat assembly configuration, placed above each other and joined together, in particular by gluing, sewing and/or welding.

23. Method according to claim 22,
**characterized in that,**
before that, an opening (25) for an open end of the other component (17) is formed in the wall of the connecting section (23) of the one component (13), wherein the connecting section (27) of the other component (17) is placed, with an open end aligned with the opening (25), over the wall areas bounding the opening (25).

24. Method according to claim 22 or 23,
**characterized in that**
lugs (41, 43) forming the connecting section (27) of the other component (17) are made by cutting the wall of a pipe or tubular original piece from the free end several times.

25. Method according to one of claims 22 to 24,
**characterized in that**
the original piece is formed multi-walled, wherein in an inner wall (42) a first group of lugs (41) and in a an outer wall (44) a second group of lugs (43) are formed, wherein the groups are twisted against each other such that - considered in circumferential direction - one lug (41, 43) of the one group is arranged between two consecutive lugs (43, 41) of the other group, respectively.

26. Method according to claim 25,
**characterized in that**
the multi-walled original piece is produced by intertwining several individual pieces.

27. Method according to claim 25,
**characterized in that**
the multi-walled original piece is produced by convolving or rolling up a planar original piece about more than 360°, in particular about at least 720°.

28. Method according to one of claims 24 to 27,
**characterized in that**
at least one additional cover (45) is connected, in particular by gluing, sewing and/or welding, with wall areas of the one component (13) bounding the opening (25), the lugs (41, 43) being at least partially disposed in between.

## Revendications

1. Agencement formant conduit de gaz
pour des systèmes à airbag employés dans des véhicules automobiles, qui comprennent au moins un coussin à gaz gonflable (11) et au moins un générateur de gaz (15), agencé à distance du coussin à gaz (11) dans la situation montée dans le véhicule, pour gonfler le coussin à gaz (11),
comprenant une première composante (13) et une seconde composante (17) entre lesquelles existe une liaison étanche aux gaz, qui est formée par un premier tronçon de liaison (23) de la première composante (13) et par un second tronçon de liaison (27) de la seconde composante (17),
dans lequel l'une au moins des deux composantes est réalisée sous forme d'une conduite de gaz (13) qui s'étend au moins essentiellement à l'extérieur du coussin à gaz (11), qui ponte un trajet libre entre le générateur de gaz (15) et le coussin à gaz (11), et via laquelle le coussin à gaz (11) peut être gonflé au moyen du générateur de gaz (15), et
dans lequel les tronçons de liaison (23, 27) des deux composantes (13, 17) sont chacun réalisés de manière en particulier flexible, souple et/ou tendre, de telle façon que, sous l'influence du gaz dégagé par le générateur de gaz (15), ils peuvent parvenir depuis une configuration de montage à plat jusque dans une configuration de gonflage.

2. Agencement formant conduit de gaz,
**caractérisé en ce que** le tronçon de liaison de l'une au moins des deux composantes (13, 17) est formé par un tuyau souple.

3. Agencement formant conduit de gaz selon la revendication 1 ou 2,
**caractérisé en ce que** le tronçon de liaison de l'une au moins des deux composantes (13, 17) est fabriqué en un matériau tissé ou textile, en particulier du même matériau que l'enveloppe du coussin à gaz (11) ou d'un matériau de même type, ou encore d'une matière plastique, en particulier flexible, souple et/ou tendre.

4. Agencement formant conduit de gaz selon l'une des revendications précédentes,
**caractérisé en ce que** les tronçons de liaison (23, 27) des deux composantes (13, 17) se chevauchent l'un l'autre au moins localement.

5. Agencement formant conduit de gaz selon l'une des revendications précédentes,
**caractérisé en ce que** les tronçons de liaison (23, 27) des deux composantes (13, 17) sont collés, cousus et/ou soudés l'un à l'autre.

6. Agencement formant conduit de gaz selon l'une des revendications précédentes,
**caractérisé en ce que** les tronçons de liaison (23, 25) des deux composantes (13, 17) sont situés, dans la configuration de montage, dans des plans qui s'étendent parallèlement l'un à l'autre.

7. Agencement formant conduit de gaz selon l'une des revendications précédentes,
**caractérisé en ce que** le tronçon de liaison de l'une au moins des deux composantes (13, 17) est réalisé sous la forme d'une couverture qui étanche la transition entre les deux composantes (13, 17).

8. Agencement formant conduit de gaz selon l'une des revendications précédentes,
**caractérisé en ce que** la paroi du tronçon de liaison (23) de l'une des composantes (13) comporte une ouverture (25) pour une extrémité ouverte de l'autre composante (17).

9. Agencement formant conduit de gaz selon la revendication 8, **caractérisé en ce que** le tronçon de liaison (23) de l'une des composantes (13) est formé par des zones de paroi qui délimitent l'ouverture (25).

10. Agencement formant conduit de gaz selon la revendication 8 ou 9,
**caractérisé en ce que** le tronçon de liaison (27) de l'autre composante (17) est formé de plusieurs pattes (41, 43) qui sont agencées à l'extrémité ouverte et qui dépassent, au moins dans la configuration de montage, dans des directions différentes.

11. Agencement formant conduit de gaz selon la revendication 10,
**caractérisé en ce que** les pattes (41, 43) sont réalisées d'une seule pièce avec la composante (17).

12. Agencement formant conduit de gaz selon la revendication 10 ou 11,
**caractérisé en ce que** les pattes (41, 43) sont obtenues en réalisant des entailles, partant de l'extrémité libre, dans la paroi d'une pièce de départ en forme de tube ou en forme de tuyau.

13. Agencement formant conduit de gaz selon l'une des revendications 10 à 12,
**caractérisé en ce qu'**il est prévu au moins un groupe de pattes (41) qui sont agencées de façon répartie et en particulier régulière dans la direction périphérique, ledit groupe comprenant en particulier exactement quatre pattes (41).

14. Agencement formant conduit de gaz selon l'une des revendications 10 à 13,
**caractérisé en ce qu'**il est prévu plusieurs groupes, en particulier exactement deux groupes, de pattes (41, 43) qui, dans la configuration de montage, sont situés dans des plans parallèles l'un à l'autre et sont tournés ou décalés l'un par rapport à l'autre de telle façon que, vues en direction périphérique, une patte respective (41, 43) d'un groupe est située entre deux pattes (43, 41) mutuellement successives de l'autre groupe.

15. Agencement formant conduit de gaz selon l'une des revendications 10 à 14,
**caractérisé en ce que** la composante (17) dotée des pattes (41, 43) est réalisée avec des parois multiples, et un groupe de pattes (41) part d'une paroi intérieure (42), et un autre groupe de pattes (43) part d'une paroi extérieure (44).

16. Agencement formant conduit de gaz selon la revendication 15,
**caractérisé en ce que** la composante (17) dotée des pattes (41, 43) comprend deux composantes individuelles situées l'une dans l'autre, dont l'une forme la paroi intérieure (42) et l'autre forme la paroi extérieure (44).

17. Agencement formant conduit de gaz selon la revendication 15,
**caractérisé en ce que** la composante (17) dotée des pattes (41, 43) est réalisée par roulage ou enroulement d'une pièce de départ surfacique sur plus de 360°, en particulier sur au moins 720°.

18. Agencement formant conduit de gaz selon l'une des revendications 10 à 17,
**caractérisé en ce qu'**il est prévu au moins une couverture additionnelle (45), qui est reliée aux régions de paroi de l'une des composantes (13) qui limitent l'ouverture, avec interposition au moins partielle des pattes (41, 43), en particulier par collage, couture et/ou soudage.

19. Agencement formant conduit de gaz selon l'une des revendications précédentes,
**caractérisé en ce que** la liaison étanche aux gaz existe entre le conduit de gaz (13) à titre de première composante et une pièce de raccordement (17) à titre de seconde composante, et la pièce de raccordement (17) sert pour la liaison étanche aux gaz (15) du générateur de gaz avec le conduit de gaz (13)

20. Système à airbag pour véhicules automobiles, comprenant
au moins un coussin à gaz (11) gonflable,
au moins un générateur de gaz (15) agencé à distance du coussin à gaz (11) dans la situation montée dans le véhicule, pour gonfler le coussin à gaz (11), et
au moins un conduit de gaz (13) qui s'étend au moins essentiellement à l'extérieur du coussin à gaz (11), qui ponte à un trajet libre entre le générateur de gaz (15) et le coussin à gaz (11), et via lequel le coussin à gaz (11) peux être gonflé au moyen du générateur de gaz (15),
dans lequel le conduit de gaz (13) est un élément constitutif d'un agencement formant conduit de gaz selon l'une des revendications précédentes.

21. Utilisation d'un agencement formant conduit de gaz selon l'une des revendications 1 à 19 dans un système à airbag pour véhicule automobile, qui comprend au moins un coussin à gaz (11) gonflable, et au moins un générateur de gaz (15), agencé à la distance du coussin à gaz (11) dans la situation montée dans le véhicule, pour gonfler le coussin à gaz (11).

22. Procédé pour établir une liaison étanche aux gaz dans un agencement formant conduit de gaz selon l'une des revendications 1 à 19, dans lequel les tronçons de liaison (23, 27) des deux composantes (13, 17) sont amenés dans leur configuration de montage à plat, posés l'un sur l'autre et reliés l'un à l'autre, en particulier par collage, couture et/ou soudage.

23. Procédé selon la revendication 22,
**caractérisé en ce que** l'on réalise au préalable, dans la paroi du tronçon de liaison (23) de l'une des composantes (13), une ouverture (25) pour une extrémité ouverte de l'autre composante (17), et le tronçon de liaison (27) de l'autre composante (17) est posé, lorsque l'extrémité ouverte est alignée avec l'ouverture (25), sur des zones de paroi qui délimitent l'ouverture (25).

24. Procédé selon la revendication 22 ou 23,
**caractérisé en ce que** l'on réalise des pattes (41, 43) qui forment le tronçon de liaison (27) de l'autre composante (17), en entaillant la paroi d'une pièce de départ en forme de tube ou en forme de tuyau, plusieurs fois en partant de l'extrémité libre.

25. Procédé selon l'une des revendications 22 à 24,
**caractérisé en ce que** la pièce de départ est réalisée à parois multiples,
dans lequel on réalise un premier groupe de pattes (41) dans une paroi intérieure (42) et un second groupe de pattes (43) dans une paroi extérieure (44), et les groupes sont tournés l'un par rapport à l'autre de telle façon que, vues en direction périphérique, une patte (41, 43) respective d'un groupe est située entre deux pattes (43, 41) mutuellement successives de l'autre groupe.

26. Procédé selon la revendication 25,
**caractérisé en ce que** la pièce de départ à parois multiples est fabriquée en agençant plusieurs pièces individuelles les unes dans les autres.

27. Procédé selon la revendication 25,
**caractérisé en ce que** la pièce de départ à parois multiples est fabriquée en roulant ou en enroulant une pièce de départ surfacique sur plus de 360°, en particulier sur au moins 720°.

28. Procédé selon l'une des revendications 24 à 27,
**caractérisé en ce qu'**au moins une couverture additionnelle (45) est reliée, en particulier par collage, couture et/ou soudage, avec les régions de paroi, qui délimitent l'ouverture (25), de l'une des composantes (13), avec interposition au moins partielle des pattes (41, 43).
